# EUROPEAN PATENT SPECIFICATION

(11) **EP 4 004 822 B1**
(45) Date of publication and mention of the grant of the patent: **18.03.2026**
(21) Application number: 20751688.1
(22) Date of filing: 10.06.2020
(51) Int. Cl.: G06N 3/04, G06N 3/08, G06N 5/04, G06F 16/951

(54) **PREDICTIVE MODEL FOR RANKING ARGUMENT CONVINCINGNESS OF TEXT PASSAGES**
PRÄDIKTIVES MODELL ZUR RANGORDNUNG DES ARGUMENTÜBERZEUGUNGSGRADES VON TEXTPASSAGEN
MODÈLE PRÉDICTIF POUR CLASSER LE NIVEAU DE PERSUASION D'ARGUMENT DE PASSAGES DE TEXTE

(30) Priority: 31.07.2019 US 201962881248 P; 07.02.2020 US 202016785359
(43) Date of publication of application: 01.06.2022
(73) Proprietor: Microsoft Technology Licensing, LLC, Redmond, WA 98052-6399 (US)
(72) Inventor: POTASH, Peter, Redmond, Washington 98052-6399 (US); HAZEN, Timothy J., Redmond, Washington 98052-6399 (US)
(74) Representative: Grünecker Patent- und Rechtsanwälte PartG mbB
(86) International application number: PCT/US2020/036895
(87) International publication number: WO 2021/021317

(56) References cited:
- US-A1- 2018 357 220
- ANONYMOUS: "Finding cycle in (directed) graph - Codeforces", 30 January 2019 (2019-01-30), pages 1 - 3, XP093240860, Retrieved from the Internet <URL:https://codeforces.com/blog/entry/64903> [retrieved on 20250120]
- IVAN HABERNAL ET AL: "Which argument is more convincing? Analyzing and predicting convincingness of Web arguments using bidirectional LSTM", PROCEEDINGS OF THE 54TH ANNUAL MEETING OF THE ASSOCIATION FOR COMPUTATIONAL LINGUISTICS (VOLUME 1: LONG PAPERS), 7 August 2016 (2016-08-07), Stroudsburg, PA, USA, pages 1589 - 1599, XP055727576, DOI: 10.18653/v1/P16-1150
- QUOC VIET NGUYEN ET AL: "Argument discovery via crowdsourcing", VLDB JOURNAL, SPRINGER VERLAG, BERLIN, DE, vol. 26, no. 4, 7 May 2017 (2017-05-07), pages 511 - 535, XP058373078, ISSN: 1066-8888, DOI: 10.1007/S00778-017-0462-9

## Description

### BACKGROUND

Conventionally ranking passage of text during web content search, for example, may be performed based on relevancy between received queries and web content. In contrast, ranking passages of text to determining whether or not the passage is convincing for a particular position differs from determining relevancy and is a difficult task. Determining the convincingness of an argument is a little studied field due to many factors, including the difficulty in acquiring underlying data to analyze and the inherent of subjectivity of the task.

It is with respect to these and other general considerations that embodiments have been described. Also, although relatively specific problems have been discussed, it should be understood that the embodiments should not be limited to solving the specific problems identified in the background.
IVAN HABERNAL ET AL: "Which argument is more convincing? Analyzing and predicting convincingness of Web arguments using bidirectional LSTM", PROCEEDINGS OF THE 54TH ANNUAL MEETING OF THE ASSOCIATION FOR COMPUTATIONAL LINGUISTICS (VOLUME 1: LONG PAPERS), pages 1589-1599, proposes a new task in the field of computational argumentation in which qualitative properties of Web arguments are investigated, namely their convincingness. The problem is cast as relation classification, where a pair of arguments having the same stance to the same prompt is judged. Two tasks are proposed: (1) predicting which argument from an argument pair is more convincing and (2) ranking all arguments to the topic based on their convincingness.
QUOC VIET NGUYEN ET AL: "Argument discovery via crowdsourcing", VLDB JOURNAL, SPRINGER VERLAG, BERLIN, DE, vol. 26, no. 4, pages 511-535, proposes a crowdsourcing-based approach to build a corpus of arguments, an argumentation base, thereby mediating the trade-off of automatic text-mining and manual processing in argument discovery.
US 2018/357220 A1 relates to techniques for detecting argumentation in text.

### Summary

It is the object of the present invention to improve prior art systems. This object is solved by the subject matter of the independent claims. Preferred embodiments are defined by the dependent claims.

Aspects of the present disclosure provide a predictive model for ranking text passages to determine how convincing the passage is with respect to a stated position. In examples, a neural network model is trained to determine convincingness for a passage of text. For a specific topic, a number of stances are identified. Pairs of passages supporting a particular stance are then identified and labeled for convincingness. The resulting labels are evaluated to determine a label quality and, once determined, the passages and their labels are provided to a machine learning process or model, a neural network for example, for training. Upon training the machine learning model, text passages may be analyzed using the network to determine a convincingness score for each passage. The convincingness scores may then be used to rank the analyzed passages and select the most convincing passage to provide in response to a query.

In an example, a trained neural network model is used to determine the convincingness of one or more passages that are received. A convincingness ranking model may be received based on a stance under a topic of the one or more passages. The one or more passages may be provided to the convincingness ranking model for ranking the one or more passages. A ranked passage from the one or more passages may be provided as having a high convincingness level from the stance within the topic.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Non-limiting and non-exhaustive examples are described with reference to the following Figures.
FIG. 1 is an overview of an example system for training and updating a neural network for ranking argument convincingness for a text passage.
FIG. 2 is an exemplary diagram of a convincingness model trainer system of the present disclosure.
FIG. 3 is an example of a method of training a convincing model according to an example system of the present disclosure.
FIGS. 4A - 4E illustrates data structures and simplified block diagrams with which the disclosure may be practiced of the present disclosure.
FIG. 5 is a data structure with which the disclosure may be practiced of the present disclosure.
FIGS. 6A-6B is an example of a method of searching for a passage that is convincing with respect to a topic and a query and updating a convincingness model according to an example system of the present disclosure.
FIGS. 7A - 7C illustrates an example of a user interface providing interactive visual representations for training and updating a convincing model according to an example system with which the disclosure may be practiced of the present invention.
FIG. 8 is a block diagram illustrating example physical components of a computing device with which aspects of the disclosure may be practiced of the present disclosure.
FIG. 9A and 9B are simplified block diagrams of a mobile computing device with which aspects of the present disclosure may be practiced of the present disclosure.
FIG. 10 is a simplified block diagram of a distributed computing system in which aspects of the present disclosure may be practiced of the present disclosure.
FIG. 11 illustrates a tablet computing device for executing one or more aspects of the present disclosure of the present disclosure.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, the disclosed aspects may take the form of a hardware implementation, a software implementation, or an implementation combining software and hardware aspects. The following detailed description is therefore not to be taken in a limiting sense, and the scope of the present disclosure is defined by the appended claims and their equivalents.

The present disclosure relates to the identifying and providing a passage that is highly convincing in terms of one or more stances for a given topic. In online searches, results are typically presented to users ranked only by the relevancy of the results to the query. Search engines typically learn such relevancy through the positive feedback based, upon other factors, on the number of user clicks. However, when queries address topics with multiple perspectives, some of which may be polarizing or divisive, search result click-through may reinforce biases of users contributing to the digital filter bubble or echo chamber phenomena. Further, due to the polarizing nature of some topics, existing processes used to identify relevance for a particular piece of content may not accurately reflect the actual convincingness of the particular piece of content.

To compensate for the effect polarization has on existing processes and, to counter increased polarization due to people's tendencies to gravitate towards online echo chambers, search engines may seek to actively provide diverse results to topical queries, or even explicitly present arguments on different sides of an issues. In such scenarios, it is desirable to not only consider the relevancy of the diverse search results, but also the quality and convincingness of the results, particularly with respect to a particular query or position.

The present disclosure provides ranking a collection of text passage by their convincingness, for use, among other areas, in a search engine or personal digital assistant in order to present arguments on different sides of a topical issue identifier by a search query. Further, the accurate determination regarding the convincingness of a passage or argument is beneficial in the areas of research and education. In some aspects, passages are annotated in a pairwise fashion: given two arguments with the same stance toward an issue, label which argument is more convincing.

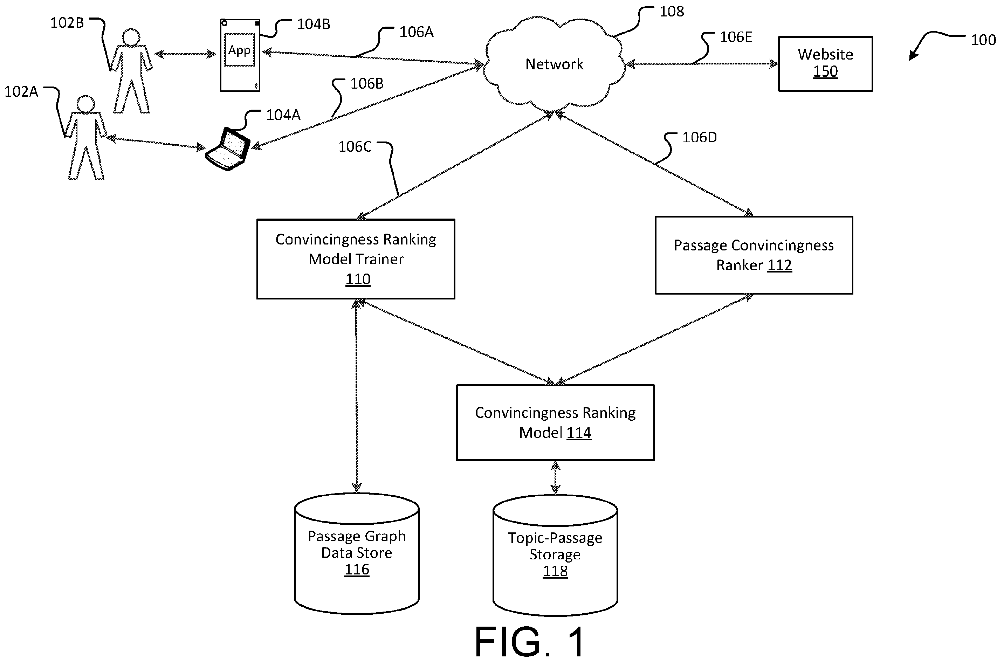

FIG. 1 illustrates an overview of an example system 100 of the present disclosure. System 100 may include one or more client computing devices 104 (e.g., client computing devices 104A and 104B) that may execute an application (e.g., a web search service application, a natural language voice recognition application, a file browser, educational application, research applications, etc.). The one or more client computing devices 104 may be used by users 102 (e.g., users 102A and 102B). The users 102 may be customers of a cloud storage service. The application is of any type that can accommodate user operations that are recorded. The client computing devices 104A and 104B connect to the network 108 via respective communication links 106A and 106B. The communication links may include, but not limited to, a wired communication link, a short-range wireless communication links, a long-range wireless communication links, and combinations thereof. The system 100 provides a set of client computing devices, a trainer and a ranker of passage convincingness using a convincingness ranking model 114, and the website 150 via the network 108. The client computing devices 104A and 104B connect to a passage convincingness ranker 112 through a communication link 106D to provide a topic and a query. The passage convincingness ranker 112 transmits a response with one or more passages, each of which represents the most convincing passage to answer the query based on one or more stances in the given topic. The passage convincingness ranker 112 uses the convincingness ranking model 114 to determine the passages.

In some aspects, a website 150 provides web content to the client computing devices 104A and 104B in response to requests from the respective client computing devices 104A and 104B. The website 150 may provide its web content to a convincingness ranking model trainer 110 through a communication link 106C for training a convincingness ranking model 114. Additionally and alternatively, the source of content is not limited to the website 150 and web content. Content with passages for training the convincingness ranking model 114 and for search for the convincing passages may originate from sources other than the website 150 but from passages stores and content storages at educational institutions and research institutions, for example.

Convincingness ranking model trainer 110 trains the convincing ranking model 114 based on content received from the website 150 or other sources of passages as sample passages. The convincingness ranking model trainer 110 uses a passage graph data store 116, a directed graph database to store given passages by using a link and an order of convincingness between two passages in the graph to selectively filter sample passages with particular directed graph relations, a circular relations, for example. In some other aspects, while not shown, the convincingness ranking model trainer 110 may use a simple ranked list, a table, or a relational database record ranked sample passages according to convincingness based on one or more stances within a topic. Convincing ranking model 114 receives a topic and a query that specifies one or more stances for the topic and, as a response, provides one or more passages that represent the most convincing text based on the given one or more stances. The convincing ranking model 114 may store known or sample passages as grouped by topics, stances, and convincingness scores in a topic-passage storage 118. In some aspect, a combination of a query, which specifies a topic and a stance, and a passage forms a query passage set.

In at least some aspects, the one or more client computing devices 104 (e.g., 104A and 104B) may be personal or handheld computers operated by one or more users 102 (e.g., a user 102A and another user 102B). For example, the one or more client computing devices 104 may include one or more of: a mobile telephone, a smart phone, a tablet, a phablet, a smart watch, a wearable computer, a personal computer, a desktop computer, a laptop computer, a gaming console (e.g., Xbox^{®}), a television, and the like. This list is exemplary only and should not be considered as limiting. Any suitable client computing device for executing the usage classifier application 114 may be utilized.

In at least some aspects, network 108 is a computer network such as an enterprise intranet, an enterprise extranet and/or the Internet. In this regard, the network 108 may include a Local Area Network (LAN), a Wide Area Network (WAN), the Internet, wireless and wired transmission mediums. In addition, the aspects and functionalities described herein may operate over distributed networks (e.g., cloud computing systems), where application functionality, memory, data storage device and retrieval, and various processing functions may be operated remotely from each other over a distributed computing network, such as the Internet or an intranet.

As should be appreciated, the various methods, devices, applications, features, etc., described with respect to FIG. 1 are not intended to limit the system 100 to being performed by the particular applications and features described. Accordingly, additional topology configurations may be used to practice the methods and systems herein and/or features and applications described may be excluded without departing from the methods and systems disclosed herein.

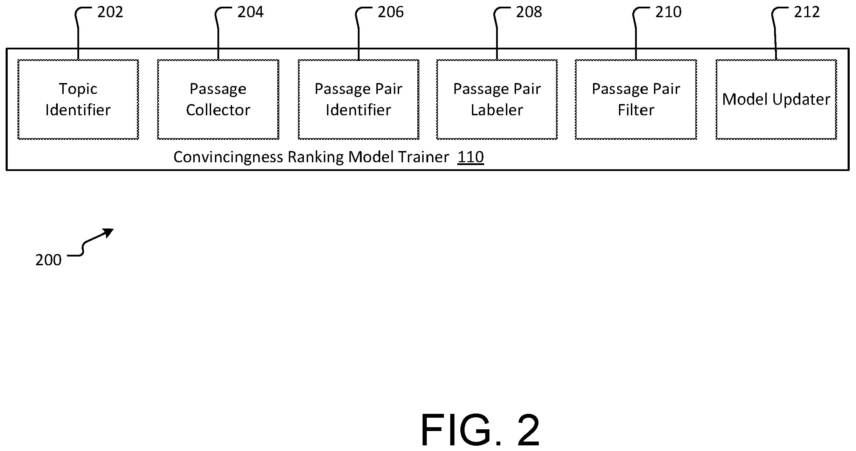

FIG. 2 illustrates an exemplary diagram of a convincingness model trainer 118A. In at last some aspects the passage convincingness ranking training system 200 includes the convincingness ranking model trainer 110. The convincingness ranking model trainer 110 includes a topic identifier 202, a passage collector 204, a passage pair identifier 206, a passage pair labeler 208, a passage pair filter 210, and a model updater 212. In some aspect, the convincingness model trainer is computer-implemented, where the computer comprises at least one processor and at least one memory to execute instructions.

The topic identifier 202 identifies a topic based on input from a system administrator or based on passages being collected for training. In examples, the topic may represent a question such as "is coffee good," "is NAFTA (North American Free Trade Agreement) a beneficial agreement," etc. In one example, the topic may be identified based upon the collected training data. That is, the training data may be associated with a specific topic. Machine learning models such as but not limited to a support vector machine may be used to analyze the collected training passages and classify the passages into topics based on a regression analysis. Alternatively, a topic of interest may be determined independently from the training data to be collected. In such instances, the collected training data may be associated with a determined topic at the identify operation 202. In some other aspects, a topic may be identified based on passages after collecting the passages for training. In some aspects, the topic identifier 202 may identify one or more stances a topic. For example, for the topic "is NAFTA a beneficial agreement" a first stance may be "NAFTA is a beneficial agreement" and a second stance may be "NAFTA is not a beneficial agreement." The stances may be used as the basis to determine whether passages are convincing based on the stances.

In some aspect, the topic identifier 202 may identify the topic and at least one stance based on input from the user. In some other aspect, the topic identifier 202 which instruction is executed by the processor read the topic and the at least one stance from the memory when the memory stores information about training the convincingness ranking model 114.

The passage collector 204 collects passages or data for training the convincingness ranking model 114. The collected training data may be text passages. The training data may be collected by a scraping data from websites, electronic documents, presentations, or any type of electronic media. In certain aspects, the training passage is text. However, one of skill in the art will appreciate that other types of passage may be collected such as audio data, images, graphs, and/or video data. In some examples, the collected data may be converted to text. In other examples, the training data may be collected and processed in its original format. In some aspects, the passage collector 204 collects passages by searching for passages based on relevancy of respective passages to the topic. The search for the passages may be based on keywords, a frequency of word appearances in the passages, for example. The passage collector 204 may collect passages that originates from a variety of sources such as but not limited to web content from web sites over the Internet, one or more passage stores such as business data stores and personal data stores. In some aspect, the passage collector 204 collects data that is relevant to the topic when the topic has been identified prior to collecting the data. In some other aspect, the passage collector 204 collects data that is unrelated to or independently from the topic.

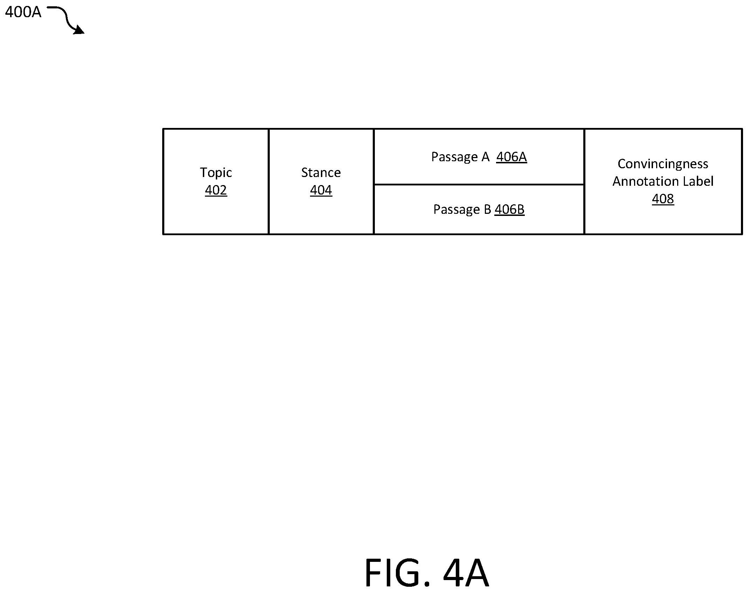

The passage pair identifier 206 identifies a passage pair from the collected passages based on the one or more stances under the topic. In examples, the pairs of passages may support the same stance or may support different stances. The two passages in a passage pair shares the same stance under a topic but at different levels of convincingness, for example. In some aspect, the passage pair identifier 206 provides a user interface to provide a passage and a query. The user interface may interactively receive annotation or input that specifies whether the passage pair argue the same stance, the opposite stance, neither, both, or irrelevant to the topic, as expressed by the query. In some other aspect, the user interface for annotating stance is called stance annotation. The passage pair as identified based on the received annotation or input through the stance annotation may be stored in a data structure with the topic (402) and the stance (404), as exemplified by FIG. 4A. The passage pair identifier 206 stores the passage pair to a collection of passage pairs as a set of training passages. In some aspect, the set of training passages may be stored in the topic-passage data storage 118. The passage pair identifier 208 scans all the passages having the same stance under the topic in the collection of passage pairs and identifies and generates passage pairs based on all combinations of the passages having the same stance under the topic.

The passage pair labeler 208 may label each passage pair in the collection of passage pairs according to their relative level convincingness based on the stance within the topic. In one example, labeling may include determining which one of the two passages is more convincing to the other based on the stance within the topic. In some aspect, the passage pair labeler 208 provides a user interface to interactively receive labels of annotations with respect to the passage pairs.

In one aspect, the pairs may be labeled using crowdsourcing. In some aspect, the passage pair labeler 208 may provide user interface to interactively present the passage pairs to have the crowdsourced individual users judge and input which passage of the passage pair is more convincing based on the stance within the topic. The received input may be called convincingness annotation to the passage pair. In other examples, the labels may be generated using a neural network or other type of machine learning analysis. In some aspect, the labels may include a score that describes a relative level of convincingness of one passage over the other in a passage pair from the stance. In some other aspect, the labels may include a binary value that specifies which one passage of the passage pair is more convincing than the other from the stance.

The passage pair filter 210 may filter the pair of passages based on a certain confidence threshold on convincingness of passages. In one aspect, the passage pair filter 210 may filter one or more passages by removing one or both passages of labeled passage pairs that fall below a certain confidence threshold. In other examples, the passage pair filter 210 may generate a directed graph data in the passage graph data store 116 for the collection of passage pairs for training. The passage pair filter 210 may generate one directed graph data for each stance within a topic, for example. In some aspects, the passage pair filter 210 analyzes the labels for different passage pairs and determines an ordering of convincingness of respective passages for the stance. The passage pair filter 210 may generate and analyze the directed graph data and determine if any cycles exist in relationships among passages in the directed graph data. In some aspect, the passages must form a linear ordering of levels of convincingness for providing a passage that is the most convincing based on the stance within the topic. An example of a cycle (i.e., breaking the linear sequence or creating a closed path sequence) may be the following: Passage A is ranked more convincing than Passage B, Passage B is ranked as more convincing than Passage C, and Passage C is ranked more convincing than Passage A. Generating and traversing the directed graph is effective to determine passages in a cyclic relationship when the directed graph forms a loop. In the example, Passage A is a first node. Passage B is a second node. Passage C is a third node. A first directed edge connects from the first node to the second node to depict Passage A being ranked more convincing than Passage B. A second directed edge connects from the second node to the third node. A third direct edge connects from the third node to the first node. The three nodes connected by the three edges form a cycle. If such a cycle exist, the passage pair filter 210 may remove one or more corresponding passages from the training data set and delete the cyclic relationship in the directed graph data in the passage graph data store 116. As the passage pair filter 210 may remove the third node and the third edge from the graph, the third passage pair filter 210 may remove Passage C from the topic-passage storage 118, for example. In some other aspect, the directed graph forms a cyclic relationship when there are more than three nodes and edges in the directed graph form a loop. Accordingly, the passage pair filter 210 filters out one or more passages that break the linear sequence (i.e., forms a cycle or creates a closed path sequence in the graph) of ranking in the convincingness. In some other aspect, the passage pair filter 210 removes a passage pair from the training data set. Yet in some other aspect, the passage pair filter 210 determines one or more query passage sets where a cycle appear in the directed graphs and remove the one or more query passage sets because the passages according to the stances as specified by the query may be ambiguous.

The model updater 212 updates the convincingness ranking model 114 based on the passage pair. The model updater 212 provides the passage pair to the convincingness ranking model 114, which is a neural network, for training the convincingness ranking model 114. Training may include processing a labeled passage pair by the convincingness ranking model 114. The convincingness ranking model 114 may analyze the pair to determine which passage of the pair is more convincing in terms of a stance under the topic. In some aspects, the relative level of convincingness between the two passages may be expressed as a score of convincingness. The model updater 212 compares the score of convincingness against a relative convincingness score from the passage pair labeler 208. The model updater uses the results of the comparison to further train the model using back propagation in the neural network model and updates weights used in the neural network.

As should be appreciated, the various methods, devices, applications and features, etc., described with respect to FIG. 2 is not intended to limit example of the passage convincingness ranking training system 200. Accordingly, additional topology configurations may be used to practice the methods and systems herein described may be excluded without departing from the methods and systems disclosed herein.

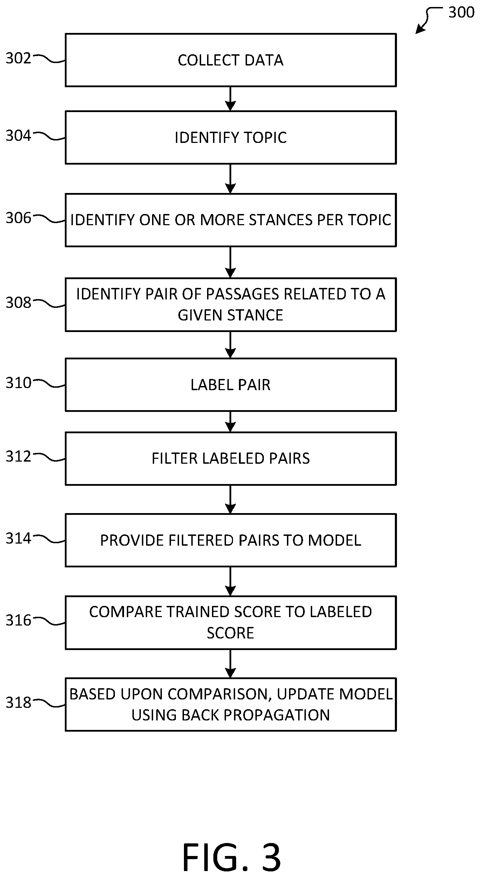

FIG. 3 is an exemplary method 300 for training a machine learning model such as but not limited to a neural network for ranking argument convincingness for a text passage. Flow begins at operation 302 where training data is collected. The collected training data may be text passages. The training data may be collected by a scraping data from websites, electronic documents, presentations, or any type of electronic media. In certain aspects, the training data is text. However, one of skill in the art will appreciate that other types of data may be collected such as audio data, images, graphs, and/or video data. In some examples, the collected data may be converted to text. In other examples, the training data may be collected and processed in its original format.

Flow continues to operation 304 where a topic is identified. In examples, the topics "coffee" and "NAFTA" may represent questions such as "is coffee good" and "is NAFTA a beneficial agreement" respectively . In one example, the topic may be identified based upon the collected training data using word extractions based on context and intent and using statistical modeling methods such as but not limited to conditional random field models. In some other aspect, the topic may be identified based on matching the words against word dictionaries and classifications of words. As a result of identifying based on the machine learning methods, the training data may be associated with a specific topic. Additionally or alternatively, a topic of interest may be determined unrelated to the collected training data. In such instances, the collected training data may be associated with a determined topic at operation 304. At operation 306, one or more stances may be identified for a topic. For example, for the topic "NAFTA" with a query "is NAFTA a beneficial agreement," a first stance may be "NAFTA is a beneficial agreement" and a second stance may be "NAFTA is not a beneficial agreement." Paring the passages allows for a comparison between the two passages to determine which of the two passages are more convincing based on a stance within the topic. In certain aspects, a decision is made as to which passage is more convincing. That is, the passages may not be determined to be equally convincing.

Once the one or more stances are identified for a topic, flow continues to operation 308 where pairs of passages for the one or more stances are determined. In examples, the pairs of passages may support the same stance or may support different stances. Once the pairs or identified, each pair of passages may be labeled based upon their convincingness at operation 310. In one example, labeling may include determining which of the two passages is more convincing to the others. In some example, the labeler must decide which passage is more convincing. In examples, the quality of the labeler may also be determined by comparing the labeler's answers to that of other labelers. Based upon the determined quality of the labeler, a weight may be assigned to the labels at operation 310. In one aspect, the weight may indicate how much each data point affects the model loss, which in turn determines values to update the model weights. The weight may be computed using a Multi-Annotator Competence Estimation (MACE) for example. In some other aspect, the pairs may be labeled using crowdsourcing. The determined pairs may be provided to one or more users to have a crowdsourced individual user judge which passage of the pair is more convincing. In other examples, the labels may be generated using a neural network or other type of machine learning analysis.

Once the labels have been generated, flow continues to operation 312 where the labeled pairs are filtered. In one aspect, filtering the labeled pairs may include removing labels that fall below a certain confidence threshold. In other examples, the labels for different passages may be analyzed to determine if any cycles exist. An example of a cycle may be the following: Passage A is ranked more convincing than Passage B, Passage B is ranked as more convincing than Passage C, and Passage C is ranked more convincing than Passage A. If such cycles exist, the corresponding labeled pairs may be removed from the training data set.

After the labeled pairs are filtered, flow continues to operation 316 where the remaining labeled pairs are provided to a neural network for training a neural network model. Training may include processing a labeled pair by the neural network. The neural network may analyze the pair to determine which answer passage of the pair is more convincing. The results of the processing of pairs by the neural network may be compared to the original labels generated at operation 310. The results of the comparison may be used to further train the model using back propagation for error correction at operation 318.

As should be appreciated, operations 302-318 are described for purposes of illustrating the present methods and systems and are not intended to limit the disclosure to a particular sequence of steps.

FIGS. 4A - 4E illustrate data structures and simplified block diagrams with which the disclosure may be practiced of the present disclosure. As should be appreciated, the various methods, devices, applications, features, etc., described with respect to FIGS. 4A - 4E are not intended to limit example of the processing in the convincingness ranking system 100. Accordingly, additional topology configurations may be used to practice the methods and systems herein described may be excluded without departing from the methods and systems disclosed herein.

FIG. 4A illustrates a data structure of trained data with which the disclosure may be practiced of the present disclosure. A topic 402 specifies a topic in which two passages (Passage A 406A and Passage B 406B) relate to. The topic 402 may be healthiness of margarine, for example. A stance 406 includes a stance under the topic. In some aspects, the stance 406 may include two or more stances, "pro" and "con" for example. The stance 406 may be in the form of a query. Under the topic 402 of "fluoride," the stance 406 may be a query "is fluoride good?" for example. The passage A (406A) and the passage B (406B) are a pair of passages that relate to the stance 404 under the topic 402. Respective passages describe the stance 404 under the topic 402 and may be at a different level of convincingness. The Passage A (406A) may be "[a]dding fluoride to your community water system is safe and prevents 25% of cavities..." for example. The Passage B (406B) may be "Fluoride exists naturally in virtually all water supplies. There are proven benefits to our health..." for example. The convincingness annotation label (408) is an annotation (e.g., "Passage A" or "Passage B") or score that describes which one of the passage pair is more convincing based on the stance 404 under the topic 402. The annotation may be 'A' to specify the passage A, for example. In some aspect, the annotation may be a number within a predetermined range of numbers (e.g., 85 in the range of 0 to 100). The passage pair labeler 208 may generate the data structure 400A based on annotations made by the analyzers or the annotators. The model updater 212 may use the data structure 400A to provide training data to train the convincingness ranking model 114.

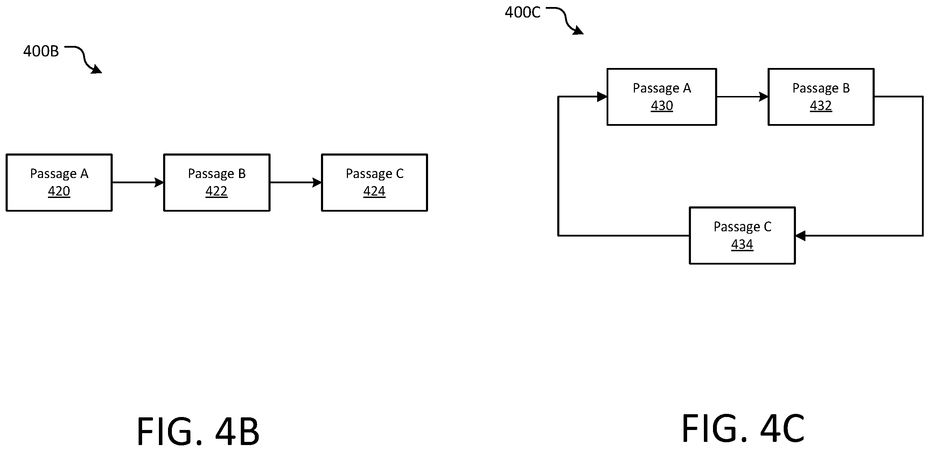

FIG. 4B illustrates a directed graph of passages with which the disclosure may be practiced of the present disclosure. In some aspect, the passage pair filter 210 generates the directed graph in sequence from a passage with the highest level of convincingness to other passages with lower level of convincingness based on a stance within a topic. The level of convincingness may be represented by scores. Each node of the directed graph of passages represent a passage being used for training the convincingness ranking model 114. Each directed edge between two nodes represent a direction from a higher level of convincingness to a lower level of convincingness of passages. In some aspect, the passage A (420) has the highest level of convincingness. The passage B (422) has the second highest level of convincingness. And, the passage C (424) has the least level of convincingness among the three passages. The passage pair filter 210 may generate the directed graph of passages in a step of training the convincingness ranking model 114.

FIG. 4C illustrates a directed graph of passages in a cyclic form with which the disclosure may be practiced of the present disclosure. In some aspect, nodes in the graph represent passages and directed edges in the graph represent passage A (430) having a higher level of convincingness than passage B (432). The passage B (432) has a higher level of convincingness than passage C (434). The passage C (434) has a higher level of convincingness than passage A (430). Thus, there is a directed cyclic relationship among the passage A (430), the passage B (432) and the passage C (434). The levels of convincingness may be represented by labels that the passage pair labeler 208 assigns to respective passages. In some aspect, the directed graph is constructed from all the passage pairs that have been annotated based on the same stance within the same topic. The passage pair filter 210 may remove passages in a cyclic relationship from the sample set of passages to ensure no ambiguity in the resulting ranking of convincingness. In some aspects, the passage pair filter 210 may remove the rogue passage that corresponds to a node where the directed edge to another node in a cyclic manner from the graph and from the collection of passage pairs as a set of training passages for training the convincing ranking model 114. Removing the rogue passage from the set of training passages may improve accuracy of ranking passages based on convincingness. In some other aspects, the passage pair filter 210 remove edges that are in a cyclic relationship while keeping the passages themselves. If all edges are deemed reliable, all the cycle edges may be removed which may or may not result in the passage nodes being removed entirely. For example when there are four passages where passage A, passage B and passage C form a cycle but passage D is deemed more convincing that passage A, passage B and passage C, there may be a graph with edges D->A, D->B and D->C but no edges between passages A, B and C.

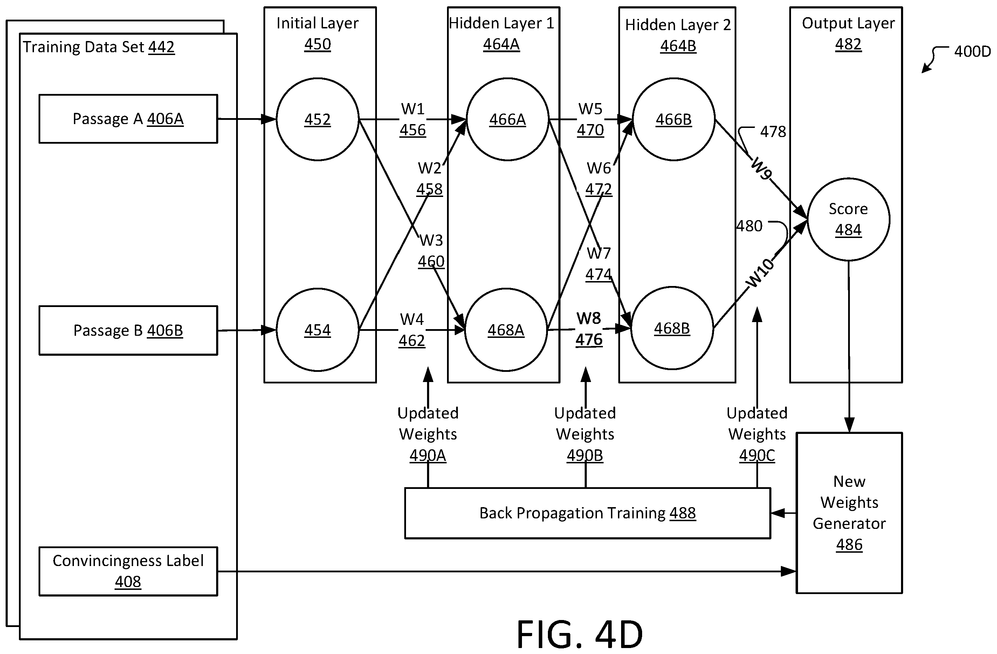

FIG. 4D illustrates the structure of the convincingness ranking model 114, which is a neural network that, in its training, takes a pair of the passages based on a stance within a topic and outputs one of the pair with a score. The neural network 400D may be a feed forward neural network with back propagation for error correction by updating weights based on a reference score, for example. The neural network 400D takes a training data set 442 that include a passage pair (i.e., Passage A (406A) and Passage B (406B)) and a label or a score that is assigned to the labeled passage pair. The neural network 400D comprises multiple layers to process the pair of passages to generate a score of convincingness as an output. The initial layer 450 processes representations of respective passages. The representation 452 is based on the Passage A (406A) while the representation 454 is based on the Passage B (406B), for example. Steps of generating a vector-representation for respective passages include identifying each word's word embedding (i.e., a vector representation of words, which maps of words to multi-dimensional vectors) and passing the word embedding through a fully-connected layer, for example. A score may be generated by summing the multi-dimensional vectors.

The neural network may be full-connected, for example. Weights W1 (456), W2 (458), W3 (460), and W4 (462), connect the initial layer 450 to the hidden layer 1 (464A). Weighted representations (466A and 468B) in the hidden layer 1 (464A) further connects to representations (466B and 468B) through weights W5 (470), W6 (472), W7 (474), and W8 (476) in the hidden layer 2 (464B).The hidden layer 2 (464B) connects to the output layer (482) through weights W9 (478) and W10 (480) to output or generate a score (484). The score indicates which one of the passage pair, Passage A (406A) or Passage B (406B), is more convincing based on the stance within the topic. The convincingness ranking model trainer 110 then compares the score (484) with the convincingness annotation label (408) in the training set to determine whether the values of the two scores agree.

Based on the difference between the two scores, a new weights generator (486) of the convincingness ranking model trainer 110 generates new weights for training the convincingness ranking model 114 and uses the back propagation training (488) for updating respective weights (490A - 490C) in respective layers for error correction. In some aspect, the new weights generator 486 generates a new set of weights for the weights W1 (456) - W10 (480), so as for the feed-forward neural network to output a score that agrees with the convincingness annotation label (408) using the passage pair Passage A (406A) and Passage B (406B). Based on the updated weights, a subsequent processing of the passage pair would generate the score (484) that agrees with the convincingness annotation label (408). In some aspect, while not shown in the Figure, there may be three hidden layers in addition to the initial and the last layer. Furthermore, dimensions of respective hidden layers after summing embeddings may be sequentially decreasing size or descending order of dimensions: 32, 16, 8, and 1, for example, thus having a total of four layers after creating the passage representation, where the last layer produces a single score.

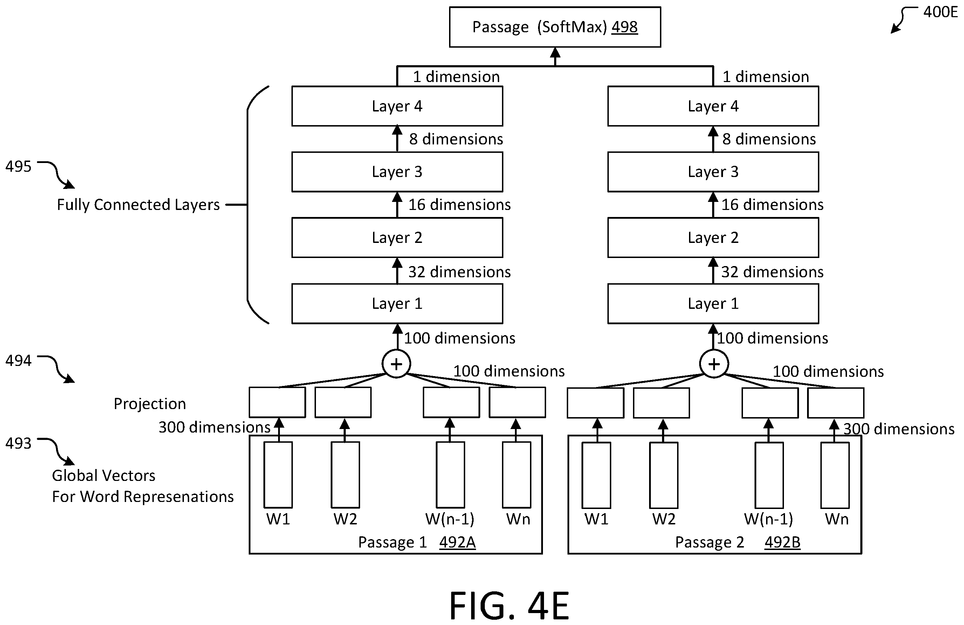

FIG. 4E illustrates an exemplary structure of the convincingness ranking model 114. The model 400E receives two passages, Passage 1 (492A) and Passage 2 (492B) as an input. The two passages are expressed as a set of global vectors for word representations (493). Passage 1 492A includes global vectors (W1, W2, ... W(n-1), and W(n)) for respective words. Passage 2 492B includes global vectors (W1, W2, ... W(n-1), and W(n)). The global vectors may be in 300 dimensions, for example. The global vectors (e.g., GloVe vectors) may be projected to generate a projected vector 494 with 100 dimensions, for example. There may be two projections, one for Passage 1 (492A) and the other for Passage 2 (492B). The projected vectors may be processed by multiple layers of a neural network (495). In some aspects, there may be one fully connected neural network for each passage. A number of dimensions may vary, such that Layer 1 generates 32 dimensions, Layer 2 generates 16 dimensions, Layer 3 generates 8 dimensions, and Layer 4 generates a 1 dimension score. Passage 2 492B may be processed similarly to Passage 1. In some aspect, the two fully-connected neural networks may operate in sequence of respective passages. In some other aspect, the two fully-connected neural networks may process respective passages concurrently. A SoftMax (498) of the two one-dimensional vectors may result in specifying a passage that is more convincing than the other. Each of the two neural networks may be a feed-forward neural network with a back propagation to update weights for refining the neural networks.

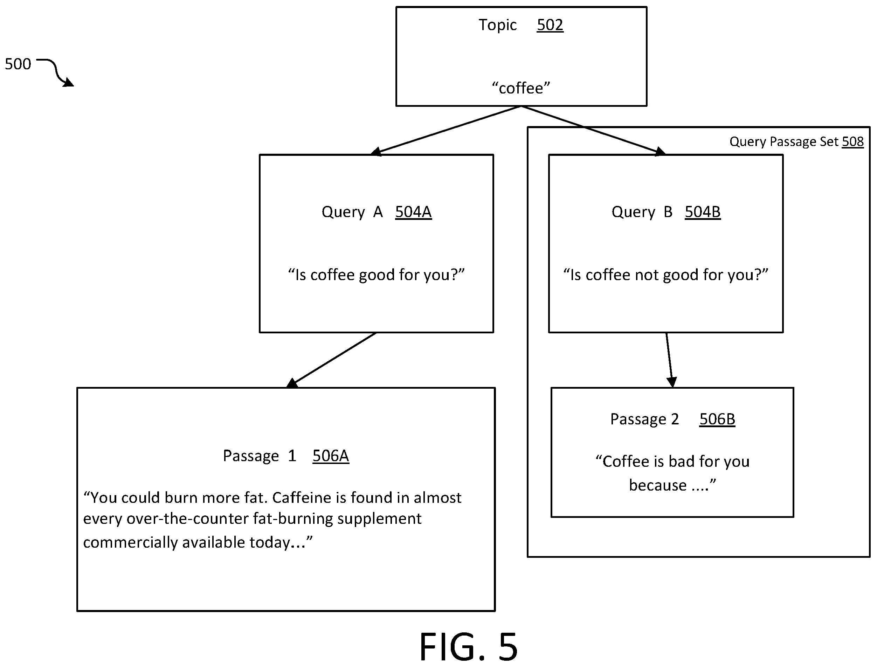

FIG. 5 is a data structure with which the disclosure may be practiced of the present disclosure. In some aspect, a topic, a query, and a passage may form a hierarchical structure, with the topic being at root. A topic (502) may be "coffee," for example. There may be one or more queries, each providing a stance within the topic. Query A (504A) has a query "is coffee good for you." The Query A (504A) has a stance (i.e., Coffee is good for you). A Passage 1 (506A) provides a passage that is in line with the stance, by indicating "[y]ou could burn more fat. Caffeine is found in almost every over-the-counter fat-burning supplement commercially available today..." Query B (504B) has a stance (i.e., Coffee is not good for you) that is distinct from the stance as depicted by Query A (504A). Passage 2 (506B) under the query B (504) contains a passage "Coffee is bad for you because ..." A combination of a query and a passage form a query passage set. For example, a query passage set 508 includes Query B (504B) and Passage 2 (506B). In some aspect, there may be more than one passages that connects to a query. Accordingly there may be more than one query passage set with a query in common. Each of the passages may provide a different level of convincingness based on the stance within the topic. The topic-passage store 118 may store topics, queries, and passages based on the data structure as depicted in FIG. 5. In some other aspect, the topic-passage store 118 may store passages that are the most convincing based on the corresponding stances (as expressed by the queries) within the topic, thereby having 1-to-1 relationship between the query and the passage in the topic-passage store 118. In some other aspect, a convincingness score may be appended to the passage in the data structure to compare the score with scores for other passages across distinct stances within the topic.

As should be appreciated, the types and the structures of data, data fields, etc., described with respect to FIG. 5 are not intended to limit example of the data structures 500. Accordingly, additional types and structures of data and data fields may be used to practice the methods and systems herein and/or components described may be excluded without departing from the methods and systems disclosed herein.

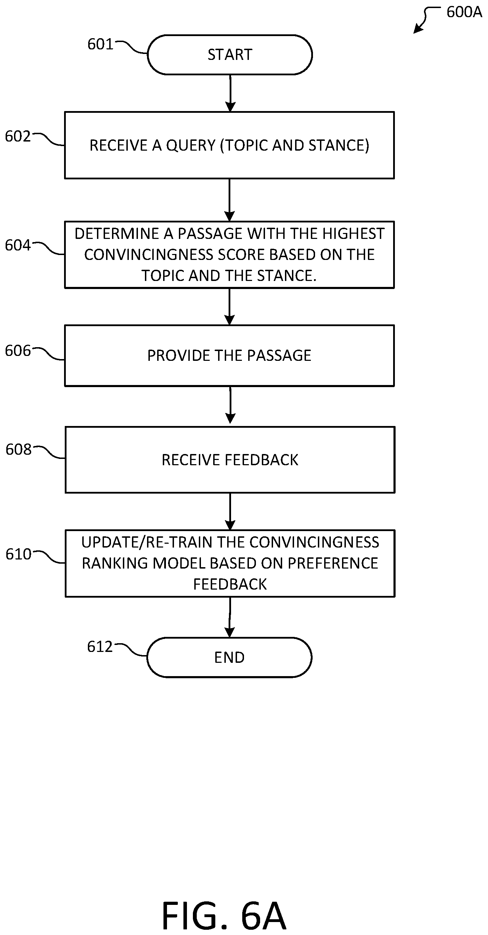

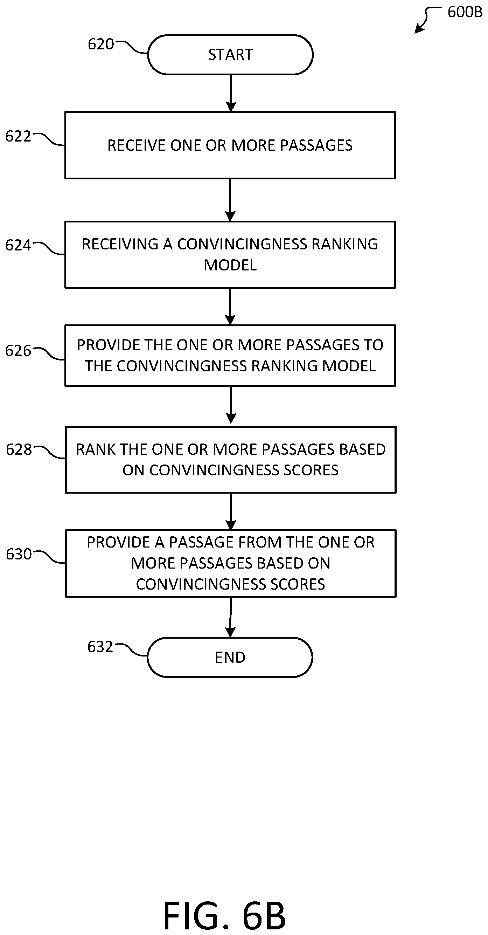

FIGS. 6A-6B illustrate examples of methods of searching for one or more passages that are convincing based on a given stance within a topic according to an example system with which the disclosure may be practiced of the present disclosure. FIG. 6A describes receiving a query that provides a topic and a stance, providing a passage that is the most convincing, followed by receiving a feedback from the user about accuracy of the passage, and updating the convincingness ranking model based on feedbacks. FIG. 6B describes receiving one or more passages and provides a passage from the one or more passages based on convincingness scores.

A general order for the operations of the method 600A is shown in FIG. 6A. Generally, the method 600A starts with a start operation 601 and ends with an end operation 614. The method 600A can include more or fewer stages or can arrange the order of the stages differently than those shown in FIG. 6A. The method 600A can be executed as a set of computer-executable instructions executed by a computer system and encoded or stored on a computer readable medium. Further, the method 600A can be performed by gates or circuits associated with a processor, an ASIC, a FPGA, a SOC, or other hardware device. Hereinafter, the method 600A shall be explained with reference to the systems, component, devices, modules, software, data structures, data characteristic representations, signaling diagrams, methods, etc. described in conjunction with FIGS. 1-5 and 7-11. In some aspects, the method 600 may executed by the passage convincingness ranker 112. The method 600A starts with the start operation 601.

The receive operation 602 receives a query. The query may be received from one or more client computing devices 104, for example. The query may include a topic and a stance within the topic. In some aspect, the topic may be determined and configured by the example system prior to receiving the query. In some other aspects, there may be a plurality of stances based on the query. The goal of the method is to provide a passage that is the most convincing from a perspective of a stance in a received query within a topic.

The determine operation 604 determines a passage that is the most convincing based on the topic and the stance. In some aspect, the determine operation 604 determines the passage with the most convincing based on the highest convincingness score associated with the passage by processing the topic and the stance using the convincingness ranking model 114. The convincingness ranking model 114 is a neural network that take the topic and the stance as inputs and provide a passage with the highest convincingness score. In some other aspect, the determine operation 604 may determine a plurality of passages, each passage being the most convincing in terms of each of the plurality of stances based on the query when there are more than one stance based on the query.

The provide operation 606 provides the passage that is the most convincing based on the stance within the query. In some aspect, the provide operation 606 transmits the passage to a client computing device 104. The client computing device 104 may display the passage to the user as the highest level of convincingness from the stance under the topic based on the query. The client computing device 104 may provide an interactive input on a feedback whether the passage is perceived as convincing to the user.

The receive operation 608 receives the feedback that indicates whether the passage provided by the provide operation 606 was perceived as the most convincing based on the stance within the topic. In some aspect, a user whom the receive operation 602 received the query from may provide the feedback after receiving the passage that the provide operation 606 has provided. Such a feedback is an important source of information to improve performance of the convincingness ranking model 114.

The update / re-train operation 610 updates / re-trains the convincing ranking model 114 based on the feedback. For example, weight scores as used in the convincingness ranking model may be updated based on the feedback, using back propagation on the feed forward neural network being used in the convincing ranking model, for example.

The series of operation 601 - 612 enables the passage convincingness ranker 112 to perform search and re-train the convincingness ranking model 114 by receiving a query (topic and stance), processing the topic and the stance on the passage convincingness model, determine a passage with the highest convincingness score, providing the passage, receiving the preference feedback, and updating re-train the passage convincingness model based on the preference feedback. As should be appreciated, operations 601-612 are described for purposes of illustrating the present methods and systems and are not intended to limit the disclosure to a particular sequence of operations.

The method 600A can be executed as a set of computer-executable instructions executed by a computer system and encoded or stored on a computer readable medium. Further, the method 600A can be performed by gates or circuits associated with a processor, an ASIC, a FPGA, a SOC, or other hardware device. Hereinafter, the method 600A shall be explained with reference to the systems, component, devices, modules, software, data structures, data characteristic representations, signaling diagrams, methods, etc. described in conjunction with FIGS. 1-5 and 6B-11.

A general order for the operations of the method 600B is shown in FIG. 6B. Generally, the method 600B starts with a start operation 620 and ends with an end operation 632. The method 600B can include more or fewer stages or can arrange the order of the stages differently than those shown in FIG. 6B. The method 600B may depict an exemplary use of the convincingness model. The method 600B can be executed as a set of computer-executable instructions executed by a computer system and encoded or stored on a computer readable medium. Further, the method 600B can be performed by gates or circuits associated with a processor, an ASIC, a FPGA, a SOC, or other hardware device. Hereinafter, the method 600 shall be explained with reference to the systems, component, devices, modules, software, data structures, data characteristic representations, signaling diagrams, methods, etc. described in conjunction with FIGS. 1-6A and 7-11. In some aspects, the method 600B may executed by the passage convincingness ranker 112. The method 600B starts with the start operation 620.

The receive operation 622 receives one or more passages. The one or more passages may be received from one or more client computing devices 104, for example. The one or more passages may include a topic and a stance within the topic. In some aspect, the topic may be determined and configured by the example system prior to receiving the one or more passages. In some other aspects, there may be a plurality of stances based on the one or more passages. The purpose of the method is to provide a passage that is the most convincing from a perspective of a stance in the received one or more passages within the topic.

The receive operation 624 receives a convincingness ranking model 114. The passage convincing model 114 may be a model that has already been trained based on a stance within a topic that relates to the one or more passages. In some aspect, a convincingness ranking model 114 relates to a stance within a topic. More than one passage convincing model may be retrieved based on more than one stances within the topic.

The provide operation 626 provides the one or more passages to the convincingness ranking model. In some aspect, the convincingness ranking model may be provided with one passage at a time to generate a score that describes a level of convincingness. In some other aspect, there may be a plurality of instances of the convincingness ranking models available to process a plurality of passages concurrently to generate convincingness scores for respective passages. A passage with the highest convincingness score may be the most convincing passages among the received passages, for example.

The rank operation 628 may rank the one or more passages based on convincingness scores for a stance for the topic. The convincingness score may be specific to the topic that is determined based on the one or more passages.

The provide operation 630 provides a passage from the one or more passages based on the convincingness scores for respective passages. In some aspect, the provide operation 630 may provide the passage for displaying through a graphical user interface. In some other aspect, the provide operation 630 may provide the passage along with other received passages based on the ranking.

The series of operation 620 - 632 enables the passage convincingness ranker 112 to perform an evaluation of one or more passages with respect to convincingness based on a stance within a topic by receiving one or more passages, retrieving a convincingness ranking model based on the one or more passages specifying a topic and one or more stances within the topic, providing the one or more passages to the convincingness ranking model, ranking the one or more passages based on convincingness scores, and providing a passage from the one or more passages based on convincingness scores with respect to the stance within the topic. As should be appreciated, operations 620-632 are described for purposes of illustrating the present methods and systems and are not intended to limit the disclosure to a particular sequence of operations.

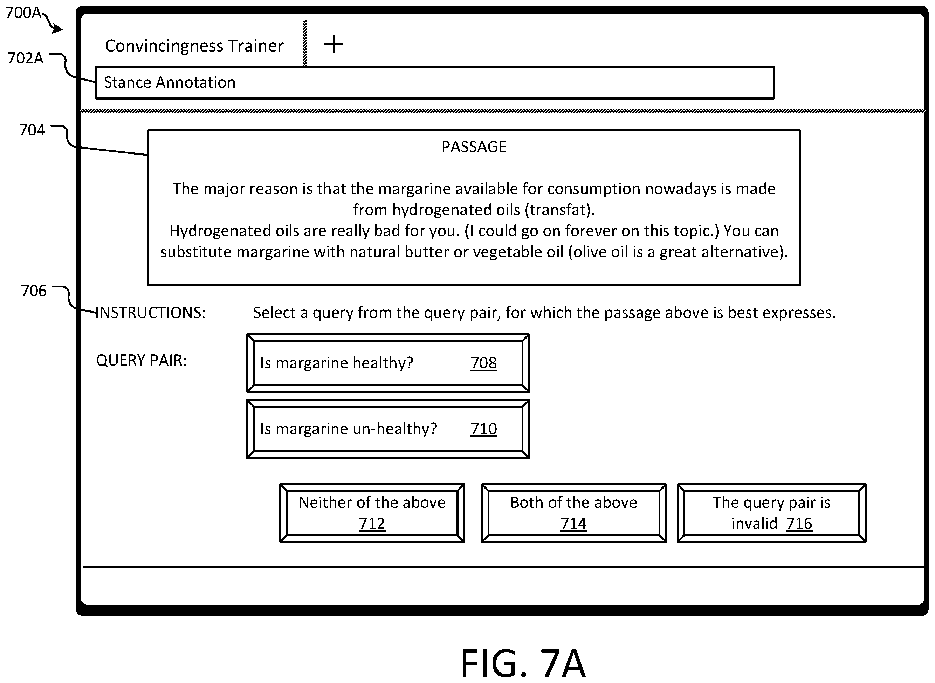

FIGS. 7A - 7C illustrates an example of a user interface providing interactive visual representations for training and updating a convincing model according to an example system with which the disclosure may be practiced of the present invention.

FIG. 7A illustrates an example of a user interface providing interactive visual presentation of a passage and five options for a response during a stance annotation during training of the convincingness ranking model 114, receiving either positive or negative stance toward an issue. In some aspect, the passage pair identifier 206 of the convincingness ranking model trainer 110 may provide the user interface to receive a stance annotation to identify a passage pair that is based on the same stance within a topic.

In some aspects, the convincingness trainer window in FIG. 7A provides the graphical user interface 700A for a stance annotation 702A, displaying a passage 704, instructions 706, and multiple input buttons (708, 710, 712, 714, and716). The passage 704 provides a passage being annotated based on a stance of the passage 704. The instructions 706 provides an instruction for the user to select an input button from five input buttons. Two of the input buttons (708 and 710) provide a query pair. The input button 708 provides "Is margarine healthy?" The input button 710 provides "Is margarine un-healthy?" Each of the query pair has a distinct stance from the other. In addition to the query pair, the graphical user interface 700A provides three input buttons for a selection: "neither of the above" (712), "Both of the above" (714), and "The query pair is invalid" (716). Based on a query selection received from one of the buttons 708 and 710, the passage pair identifier 206 may identify a query (and its stance) to associate with the passage. The passage pair identifier 206 may select a passage that relates to a query with an opposing stance to form a passage pair.

In some aspect, the graphical user interface 700A may provide a timer (not shown) that require the user to input a response within a predetermine time period before moving on to provide a next passage for a stance annotation. In some other aspect, the graphical user interface 700A may enable the selectable buttons 708 and 710 for a certain time period to elapse and then disable the buttons 708 and 710 thereafter. The certain time period may be predetermined, for example. Limiting a timer period to receive a selection in the stance annotation 702A may prevent user fatigue and maintain focus in annotating stances to passages.

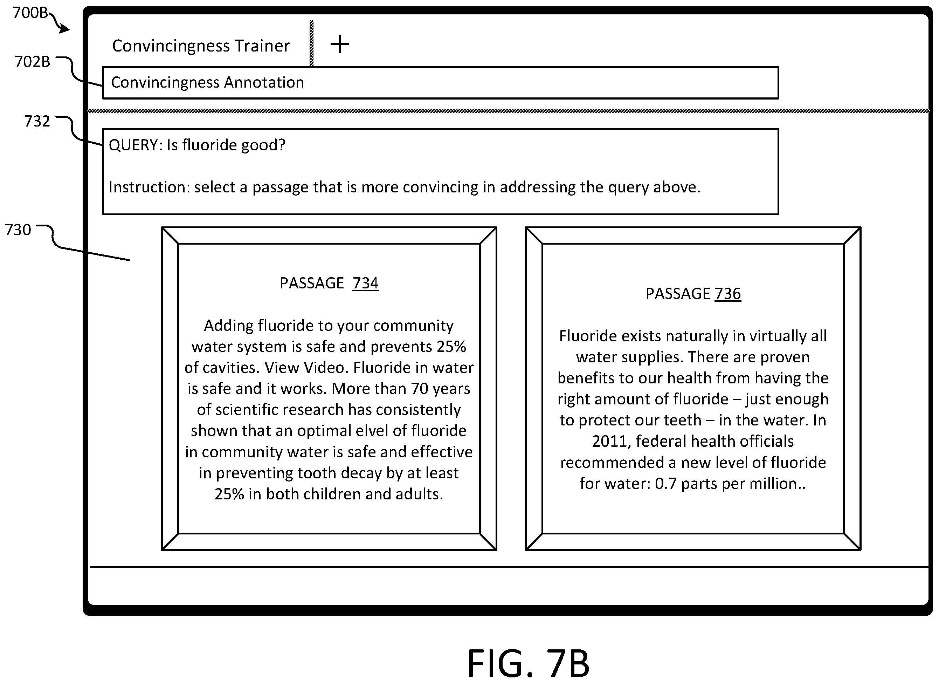

FIG. 7B illustrates an example of a user interface providing an interactive visual presentation of a query and a pair of passages for selection of a passage as a response during a convincingness annotation. In some aspect, the passage pair labeler 208 of the convincingness ranking model trainer 110 may provide the user interface in the convincing trainer window 700B with convincingness annotation 702B, displaying a query 732 with a passage pair 730 for selection. The query 732, "is fluoride good," provide a stance where fluoride is good, within the topic of fluoride. Passage 734 and passage 736 are a passage pair in the same stance within the topic, but at a different level of convincingness. Both the passage 734 and the passage 736 are provided as separate buttons for selection. The user interface receives a selection of one of the two buttons as the user selects either the passage 734 or the passage 736, indicating that the selected passage has a higher level of convincingness than the other.

Based on a received passage from the convincingness annotation, the passage pair labeler 208 labels the selected passages as more convincing than the other of the passage pair. The differentiated levels of convincingness of the passage pair may then be used to generate a directed graph structure for the passage pair and other passages based on the stance within the topic.

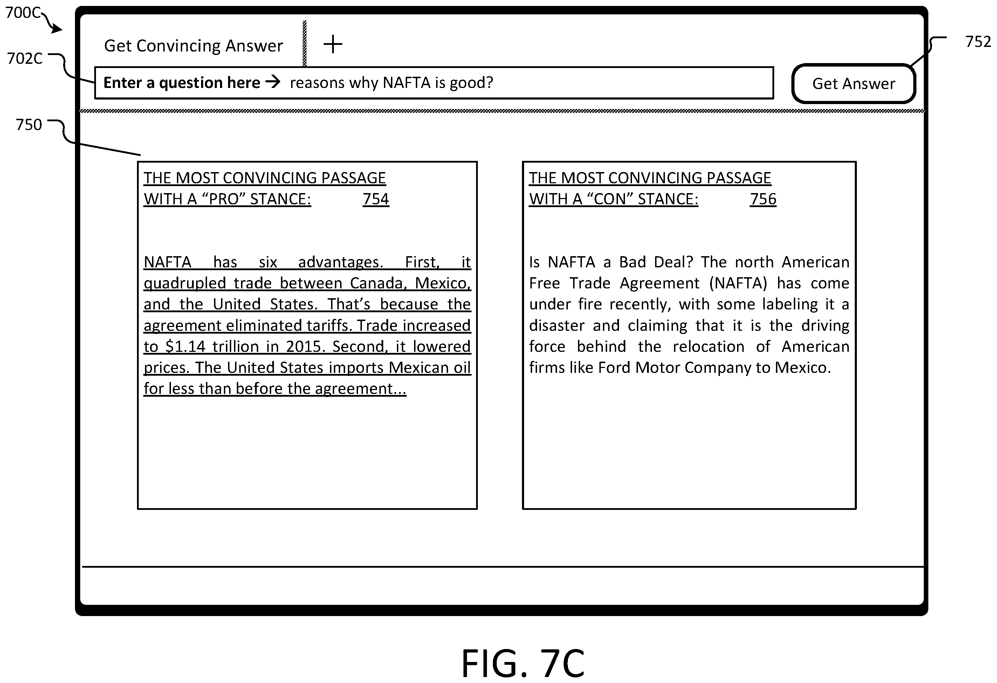

FIG. 7C illustrates an example of a user interface 700C of the Get Convincing Answer window. The user interface 700C receives a question as entered by the user, and, in return, provides the most convincing passage in the "PRO" stance and the most convincing passage in the "CON" stance within the topic. The topic may be determined based on the received question by natural language processing model such as a support vector machine to analyze the received question and classify the received question into a topic based on a regression. In some other aspect, the passage convincingness ranker 112 may determine a topic by comparing words in the received question against a list of keywords that specify a topic. In some aspect, the passage convincingness ranker 112 may provide the user interface to receive the question and use the trained convincingness ranking model 114 to generate passages 750 that are the most convincing based on the "PRO" and "CON" stances within the topic. The user interface 700C provides an input area 702C to receive an input that represents a question. The question specifies a topic and one or more stances. An affirmative answer to the question describes one stance, while the negative answer to the question describe another stance. Yes to the question "reasons why NAFTA is good" provides a stance where NAFTA is good, while no to the question provides another stance where NAFTA is not good. The passage convincingness ranker 112 may receive the question when the user interactively selects the Get Answer button 752. In some aspect, the interactive selection of the Get Answer button 752 triggers a search operation, which is the method 600 for example, for a passage that is the most convincing from a stance under a topic as specified by the question. The passage "the most convincing passage with a "PRO" stance

(754) provides a passage that is the most convincing based on the "PRO" stance within the topic of NAFTA. The passage "the most convincing passage with a "CON" stance (756) provides a passage that is the most convincing based on the "CON" stance within the topic of NAFTA. The passage convincingness ranker 112 may determine the passages using the trained convincingness ranking model 114 with the topic-passage storage 118. While not shown in the figure, the passage convincingness ranker 112 may provide user interface to receive a feedback as to whether the provided passages are convincing to the users. The feedback may include a selection of whether affirmative or negative and comments, for example. The passage convincingness ranker 112 may use the feedback to update or retrain the convincingness ranking model 114 by providing a score for adjusting the weights in the convincing ranking model 114. The passage convincingness ranker 112 may execute the method 600 of searching for one or more passages that are convincing based on a given stance within a topic.

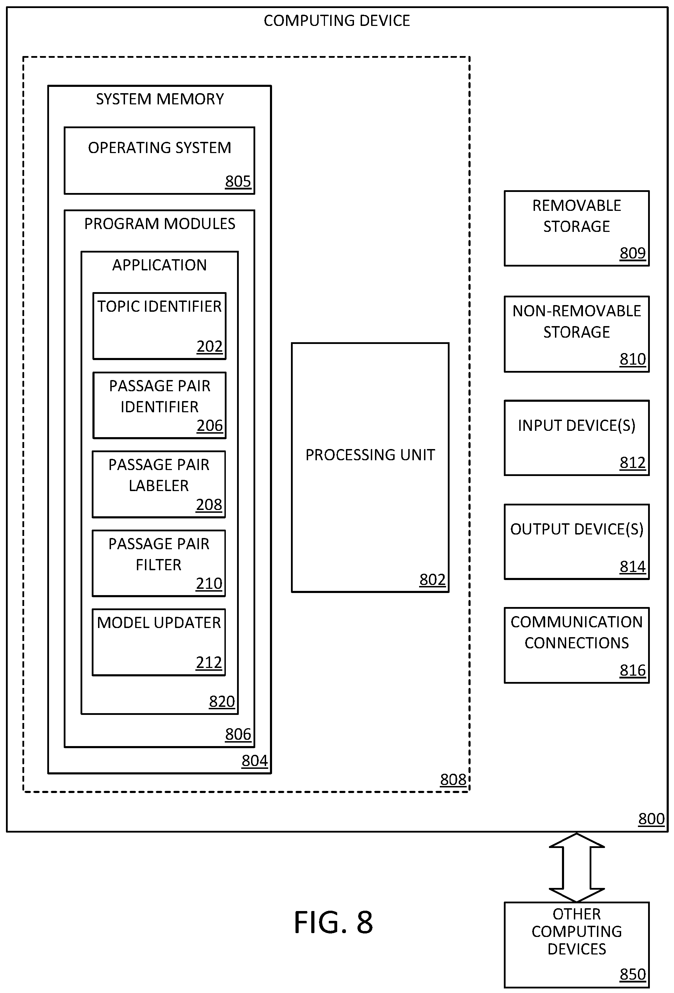

As an example of a processing device operating environment, refer to the exemplary operating environments depicted in FIGS. 8-11. In other instances, the components of systems disclosed herein may be distributed across and executable by multiple devices. For example, input may be entered on a client device and information may be processed or accessed from other devices in a network (e.g., server devices, network appliances, other client devices, etc.).

FIGS. 8-11 and the associated descriptions provide a discussion of a variety of operating environments in which aspects of the disclosure may be practiced. However, the devices and systems illustrated and discussed with respect to FIGS. 8-11 are for purposes of example and illustration and are not limiting of a vast number of computing device configurations that may be utilized for practicing aspects of the disclosure, described herein.

FIG. 8 is a block diagram illustrating physical components (e.g., hardware) of a computing device 800 with which aspects of the disclosure may be practiced. The computing device components described below may be suitable for the computing devices described above, including the client computing devices 104A-B and the convincingness ranking model trainer 110, the passage convincingness ranker 112, the convincingness ranking model 114, the passage graph data store 116, a topic passage storage 118, and the website 150. In a basic configuration, the computing device 800 may include at least one processing unit 802 and a system memory 804. Depending on the configuration and type of computing device, the system memory 804 may comprise, but is not limited to, volatile storage device (e.g., random access memory), non-volatile storage device (e.g., read-only memory), flash memory, or any combination of such memories. The system memory 804 may include an operating system 805 and one or more program modules 806 suitable for performing the various aspects disclosed herein such as the topic identifier 202, the passage pair identifier 206, a passage pair labeler 208, a passage pair filter 210, and the model updater 212. The operating system 805, for example, may be suitable for controlling the operation of the computing device 800. Furthermore, embodiments of the disclosure may be practiced in conjunction with a graphics library, other operating systems, or any other application program and is not limited to any particular application or system. This basic configuration is illustrated in FIG. 8 by those components within a dashed line 808. The computing device 800 may have additional features or functionality. For example, the computing device 800 may also include additional data storage devices (removable and/or non-removable) such as, for example, magnetic disks, optical disks, or tape. Such additional storage device is illustrated in FIG. 8 by a removable storage device 809 and a non-removable storage device 810.

As stated above, a number of program modules and data files may be stored in the system memory 804. While executing on the processing unit 802, the program modules 806 (e.g., application 820) may perform processes including, but are not limited to, the aspects, as described herein. Other program modules that may be used of the present disclosure may include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in FIG. 8 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 800 on the single integrated circuit (chip). Embodiments of the disclosure may also be practiced using other technologies capable of performing logical operations such as, for example, AND, OR, and NOT, including but are not limited to mechanical, optical, fluidic, and quantum technologies. In addition, embodiments of the disclosure may be practiced within a general purpose computer or in any other circuits or systems.

The computing device 800 may also have one or more input device(s) 812 such as a keyboard, a mouse, a pen, a sound or voice input device, a touch or swipe input device, etc. The output device(s) 814 such as a display, speakers, a printer, etc. may also be included. The aforementioned devices are examples and others may be used. The computing device 800 may include one or more communication connections 816 allowing communications with other computing devices 850. Examples of suitable communication connections 816 include, but are not limited to, radio frequency (RF) transmitter, receiver, and/or transceiver circuitry; universal serial bus (USB), parallel, and/or serial ports.

The term computer readable media as used herein may include computer storage device media. Computer storage device media may include volatile and nonvolatile, removable and non-removable media implemented in any method or technology for storage device of information, such as computer readable instructions, data structures, or program modules. The system memory 804, the removable storage device 809, and the non-removable storage device 810 are all computer storage device media examples (e.g., memory storage device). Computer storage device media may include RAM, ROM, electrically erasable read-only memory (EEPROM), flash memory or other memory technology, CD-ROM, digital versatile disks (DVD) or other optical storage device, magnetic cassettes, magnetic tape, magnetic disk storage device or other magnetic storage devices, or any other article of manufacture which can be used to store information and which can be accessed by the computing device 800. Any such computer storage device media may be part of the computing device 800. Computer storage device media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

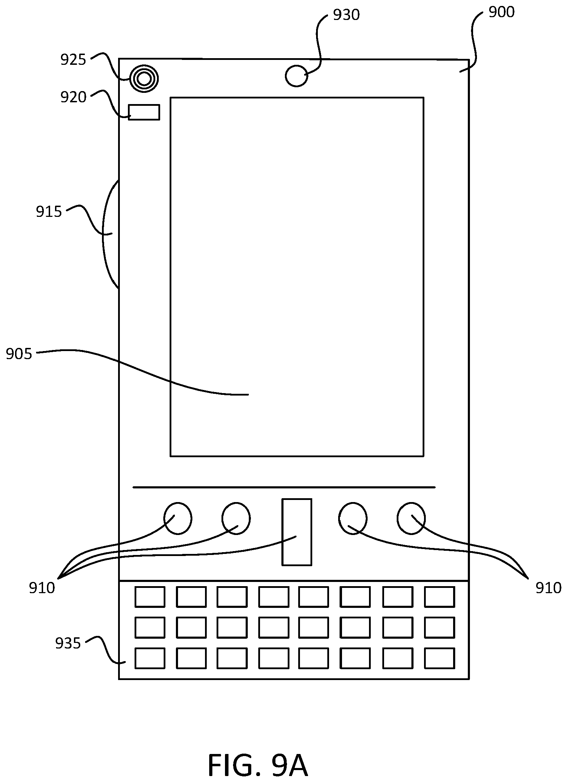

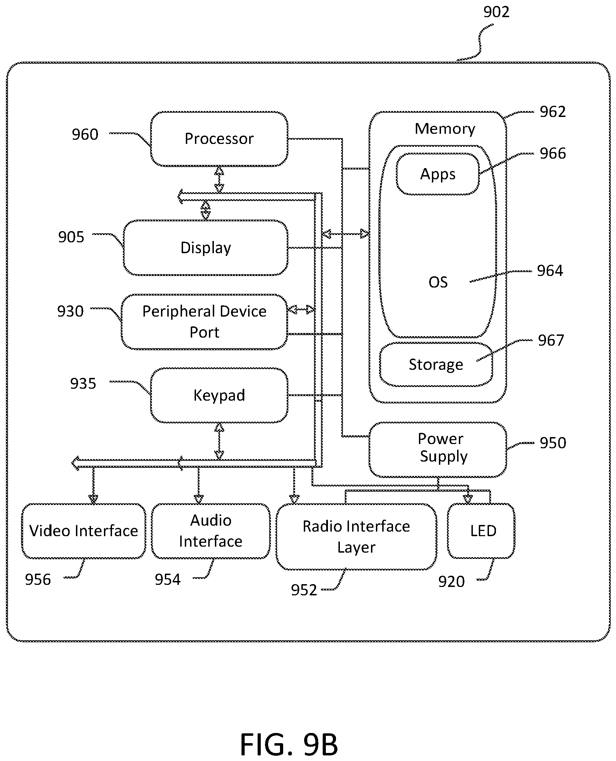

FIGS. 9A and 9B illustrate a mobile computing device 900, for example, a mobile telephone, a smart phone, wearable computer (such as a smart watch), a tablet computer, a laptop computer, and the like, with which embodiments of the disclosure may be practiced. In at least some aspects, the client may be a mobile computing device. With reference to FIG. 9A, one aspect of a mobile computing device 900 for implementing the aspects is illustrated. In a basic configuration, the mobile computing device 900 is a handheld computer having both input elements and output elements. The mobile computing device 900 typically includes a display 905 and one or more input buttons 910 that allow the user to enter information into the mobile computing device 900. The display 905 of the mobile computing device 900 may also function as an input device (e.g., a touch screen display). If included, an optional side input element 915 allows further user input. The side input element 915 may be a rotary switch, a button, or any other type of manual input element. In alternative aspects, mobile computing device 900 may incorporate more or less input elements. For example, the display 905 may not be a touch screen in some embodiments. In yet another alternative embodiment, the mobile computing device 900 is a portable phone system, such as a cellular phone. The mobile computing device 900 may also include an optional keypad 935. Optional keypad 935 may be a physical keypad or a "soft" keypad generated on the touch screen display. In various embodiments, the output elements include the display 905 for showing a graphical user interface (GUI), a visual indicator 920 (e.g., a light emitting diode), and/or an audio transducer 925 (e.g., a speaker). In at least some aspects, the mobile computing device 900 incorporates a vibration transducer for providing the user with tactile feedback. In yet another aspect, the mobile computing device 900 incorporates input and/or output ports, such as an audio input (e.g., a microphone j ack), an audio output (e.g., a headphone j ack), and a video output (e.g., a HDMI port) for sending signals to or receiving signals from an external device.

FIG. 9B is a block diagram illustrating the architecture of one aspect of a mobile computing device. That is, the mobile computing device 900 can incorporate a system (e.g., an architecture) 902 to implement some aspects. In one embodiment, the system 902 is implemented as a "smart phone" capable of running one or more applications (e.g., browser, e-mail, calendaring, contact managers, messaging clients, games, and media clients/players). In at least some aspects, the system 902 is integrated as a computing device, such as an integrated personal digital assistant (PDA) and wireless phone.

One or more application programs 966 may be loaded into the memory 962 and run on or in association with the operating system 964. Examples of the application programs include phone dialer programs, e-mail programs, personal information management (PIM) programs, word processing programs, spreadsheet programs, Internet browser programs, messaging programs, and so forth. The system 902 also includes a non-volatile storage device area 968 within the memory 962. The non-volatile storage device area 967 may be used to store persistent information that should not be lost if the system 902 is powered down. The application programs 966 may use and store information in the non-volatile storage device area 967, such as e-mail or other messages used by an e-mail application, and the like. A synchronization application (not shown) also resides on the system 902 and is programmed to interact with a corresponding synchronization application resident on a host computer to keep the information stored in the non-volatile storage device area 967 synchronized with corresponding information stored at the host computer. As should be appreciated, other applications may be loaded into the memory 962 and run on the mobile computing device 900 described herein (e.g., search engine, extractor module, relevancy ranking module, answer scoring module, etc.).

The system 902 has a power supply 950, which may be implemented as one or more batteries. The power supply 950 might further include an external power source, such as an AC adapter or a powered docking cradle that supplements or recharges the batteries.

The system 902 may also include a radio interface layer 952 that performs the function of transmitting and receiving radio frequency communications. The radio interface layer 952 facilitates wireless connectivity between the system 902 and the "outside world," via a communications carrier or service provider. Transmissions to and from the radio interface layer 952 are conducted under control of the operating system 964. In other words, communications received by the radio interface layer 952 may be disseminated to the application programs 966 via the operating system 964, and vice versa.

The visual indicator 920 may be used to provide visual notifications, and/or an audio interface 954 may be used for producing audible notifications via the audio transducer 925. In the illustrated embodiment, the visual indicator 920 is a light emitting diode (LED) and the audio transducer 925 is a speaker. These devices may be directly coupled to the power supply 950 so that when activated, they remain on for a duration dictated by the notification mechanism even though the processor 960 and other components might shut down for conserving battery power. The LED may be programmed to remain on indefinitely until the user takes action to indicate the powered-on status of the device. The audio interface 954 is used to provide audible signals to and receive audible signals from the user. For example, in addition to being coupled to the audio transducer 925, the audio interface 954 may also be coupled to a microphone to receive audible input, such as to facilitate a telephone conversation. In accordance with embodiments of the present disclosure, the microphone may also serve as an audio sensor to facilitate control of notifications, as will be described below. The system 902 may further include a video interface 956 that enables an operation of an on-board camera 930 to record still images, video stream, and the like.

A mobile computing device 900 implementing the system 902 may have additional features or functionality. For example, the mobile computing device 900 may also include additional data storage devices (removable and/or non-removable) such as, magnetic disks, optical disks, or tape. Such additional storage device is illustrated in FIG. 9B by the non-volatile storage device area 967.

Data/information generated or captured by the mobile computing device 900 and stored via the system 902 may be stored locally on the mobile computing device 900, as described above, or the data may be stored on any number of storage device media that may be accessed by the device via the radio interface layer 952 or via a wired connection between the mobile computing device 900 and a separate computing device associated with the mobile computing device 900, for example, a server computer in a distributed computing network, such as the Internet. As should be appreciated such data/information may be accessed via the mobile computing device 900 via the radio interface layer 952 or via a distributed computing network. Similarly, such data/information may be readily transferred between computing devices for storage device and use according to well-known data/information transfer and storage device means, including electronic mail and collaborative data/information sharing systems.

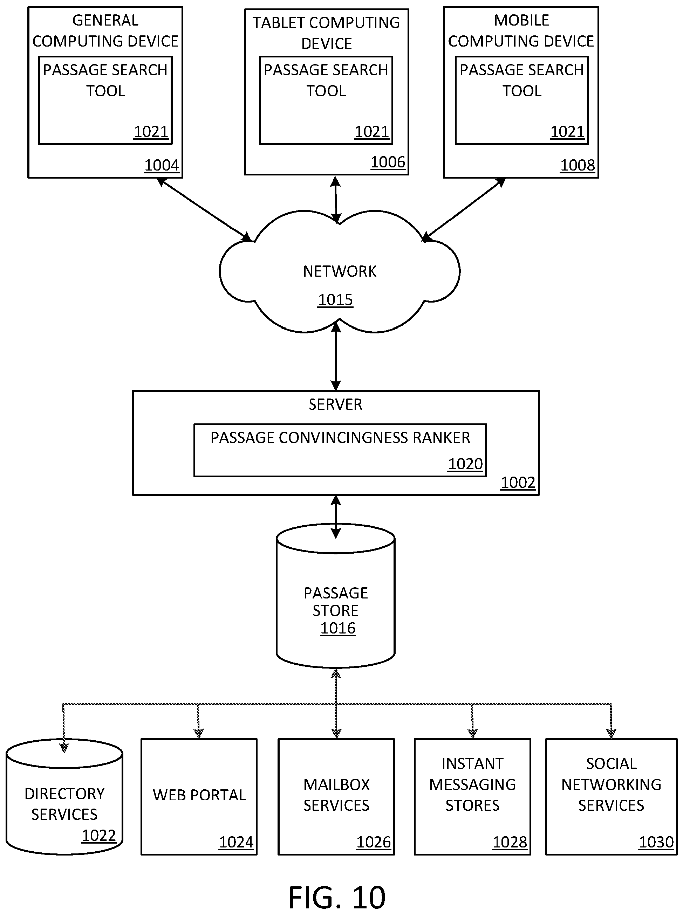

FIG. 10 illustrates one aspect of the architecture of a system for processing data received at a computing system from a remote source, such as a personal computer 1004, tablet computing device 1006, or mobile computing device 1008, as described above. Content displayed at server device 1002 may be stored in different communication channels or other storage device types. For example, various documents may be stored using a directory service 1022, a web portal 1024, a mailbox service 1026, an instant messaging store 1028, or a social networking services 1030. A passage search tool 1021 may be employed by a client that communicates with server device 1002, and/or usage a passage convincingness ranker 1020 may be employed by server device 1002. The server device 1002 may provide data to and from a client computing device such as a personal computer 1004, a tablet computing device 1006 and/or a mobile computing device 1008 (e.g., a smart phone) through a network 1015. By way of example, the computer system described above may be embodied in a personal computer 1004, a tablet computing device 1006 and/or a mobile computing device 1008 (e.g., a smart phone). Any of these embodiments of the computing devices may obtain content from the data store with passages 1016, in addition to receiving graphical data useable to be either pre-processed at a graphic-originating system, or post-processed at a receiving computing system. In some aspects, the server 1002, the data store with passages 2016, the directory services, the web portal 1024, the mailbox services 1026, the instant message stores 1028, and the social networking services 1030 may constitute a cloud storage system.

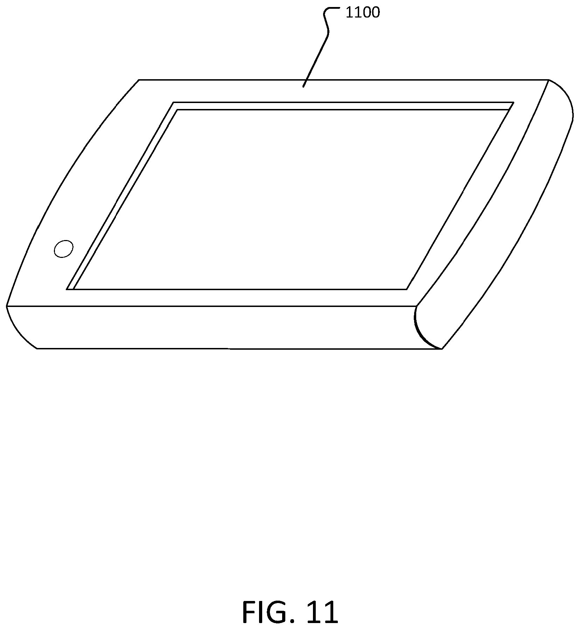

FIG. 11 illustrates an exemplary tablet computing device 1100 that may execute one or more aspects disclosed herein. In addition, the aspects and functionalities described herein may operate over distributed systems (e.g., cloud-based computing systems), where application functionality, memory, data storage device and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

## Claims

1. A computer-implemented method for generating a ranked list of passages based on convincingness of a stance under a topic, the method comprising:
receiving (622) one or more passages, wherein the one or more passages comprise a query, wherein the query comprises the topic, wherein the query specifies the stance, and wherein the passages provide arguments based on the stance under the topic;
providing (626) the one or more passages to a convincingness ranking model, wherein the convincingness ranking model is based on a neural network;
ranking (628) the one or more passages based on convincingness scores;
providing (630) a ranked passage from the one or more passages;
identifying a passage pair upon receiving a plurality of passages, wherein the passage pair comprises a first passage and a second passage;
storing the passage pair to a collection of passage pairs;
generating a directed graph, wherein the directed graph comprises a first node representing the first passage, a second node representing the second passage, a third node representing a third passage, a first directed edge from the first node to the second node based on a label of the passage pair, a second directed edge from the second node to the third node, and a third directed edge from the third node to the first node;
detecting a cyclic relationship when the graph forms a loop;
removing the third node representing the third passage from the directed graph and the collection of passage pairs as a training set of passages; and
providing a user interface for stance annotation, **characterised in that** the user interface for the stance annotation comprises:
displaying the first passage and a query pair under the topic;
enabling either one of the query pair being interactively selectable;
receiving the selection of either one of the query pair; and
identifying the passage pair based on the stance based on the selection of either one of the query pair.

2. The computer-implemented method of claim 1, wherein the user interface for the stance annotation further comprises disabling the selectable either one of the query pair when a predetermined time period elapses before receiving a selection of either one of the query pair.

3. The computer-implemented method of claim 1, the computer-implemented method further comprising:
providing a user interface for convincingness annotation, wherein the user interface for the convincingness annotation comprises:
displaying the query, wherein the query provides the stance under the topic;
displaying the passage pair;
enabling either one of the passage pair being interactively selectable;
disabling the selectable either one of the passage pair when a predetermined time period elapses before receiving a selection of either one of the passage pair;
receiving the selection of either one of the passage pair; and
labeling at least one passage of the passage pair based on the selection of either one of the passage pair.

4. The computer-implemented method of claim 1, further comprising:
collecting the passages comprises scraping data from at least one of web content at a website or an electronic document from a document store based on relevancy of the data with the topic.

5. The computer-implemented method of claim 1, the computer-implemented method further comprising:
providing the passage pair to the convincingness ranking model;
determining a convincingness score based on the passage pair; and
compare the convincingness score and the label of the passage pair;
updating the convincingness ranking model based on comparison between the convincingness score and the label of the passage pair.

6. The computer-implemented method of claim 5, wherein the convincingness ranking model is based on a feed forward neural network with back propagation for updating the convincingness ranking model with error correction.

7. The computer-implemented method of claim 6, wherein the feed forward neural network comprises an initial layer for receiving the passage pair, a plurality of hidden layers with a descending order of dimensions, a last layer for generating the convincingness score, and a generator of new weights for the back propagation to the feed forward neural network when the convincingness score and the label of the passage pair are distinct.

8. The computer-implemented method of claim 7, wherein the labeled passage pair comprises the topic, the stance, the passage pair, and a convincingness annotation as the label of the passage pair.

9. The computer-implemented method of claim 1, the computer-implemented method further comprising:
receiving the query, wherein the query comprises the topic and the stance;
determining a passage, wherein the passage relates to the highest convincingness score based on the topic and the stance among the one or more passages based on the stance under the topic;
providing the passage;
receiving a feedback through a user interface, wherein the feedback specifies whether the passage is convincing based on the stance under the topic;
updating the convincingness ranking model based on the feedback.

10. The computer-implemented method of claim 9, the computer-implemented method further comprising:
providing a user interface, the user interface comprising:
receiving the query in a first input area;
receiving a user input in a second input area to trigger searching for the passage; and
displaying the passage.

11. The computer-implemented method of claim 10, the computer-implemented method further comprising:
the user interface further comprising:
receiving a feedback input, wherein the feedback input represents the feedback of whether the passage is convincing based on the stance under the topic.

12. A system for training a passage convincingness ranker based on passages with a query representing a stance under a topic, the system comprising:
a processor (802); and
a memory (804) storing computer executable instructions, which, when executed, cause the processor to:
identify (304) the topic;
collect (302) the passages, wherein the passages are relevant to the query representing the stance under the topic, the passages originating from one or more passage stores;
identify (308) a passage pair from the passages, wherein the passage pair comprises a first passage and a second passage, both the first passage and the second passage being based at least on the stance under the topic;
label (310) the passage pair, wherein the labeling relates to generating a label of the passage pair according to a relative level of convincingness between the first passage and the second passage based on the stance under the topic;
filter (312) the first passage of the passage pair when the first passage creates a closed path sequence of convincingness ranking of the passages;
update (318) a convincingness ranking model using the passage pair and the label of the passage pair, wherein the convincingness ranking model is based on a machine learning model;
store the passage pair to a collection of passage pairs;
generate a directed graph, wherein the directed graph comprises a first node representing the first passage, a second node representing the second passage, and a first directed edge from the first node to the second node based on the labeling relating to levels of the convincingness for the first passage and the second passage, a second directed edge from the second node to a third node representing a third passage;
detect a cyclic relationship when a third directed edge connects from the third node to the first node;
remove the third node representing the third passage from the directed graph and the collection of passage pairs as a training set of passages; and
provide a user interface for stance annotation, **characterised in that** the user interface for the stance annotation comprises:
display the first passage and a query pair under the topic;
enable either one of the query pair being interactively selectable;
receive the selection of either one of the query pair; and
identify the passage pair based on the stance based on the selection of either one of the query pair.

## Patentansprüche

1. Computerimplementiertes Verfahren zum Erstellen einer Rangliste von Passagen basierend auf der Überzeugungskraft einer Haltung zu einem Thema, wobei das Verfahren umfasst:
Empfangen (622) einer oder mehrerer Passagen, wobei die eine oder mehreren Passagen eine Abfrage umfassen, wobei die Abfrage das Thema umfasst, wobei die Abfrage die Haltung spezifiziert und wobei die Passagen Argumente basierend auf der Haltung zu dem Thema liefern;
Bereitstellen (626) der einen oder mehreren Passagen für ein Überzeugungskraft-Rangmodell, wobei das Überzeugungskraft-Rangmodell auf einem neuronalen Netzwerk basiert;
Einstufen (628) der einen oder mehreren Passagen basierend auf Überzeugungskraftbewertung en;
Bereitstellen (630) einer eingestuften Passage aus den einen oder mehreren Passagen;
Identifizieren eines Passagenpaares nach Empfang mehrerer Passagen, wobei das Passagenpaar eine erste Passage und eine zweite Passage umfasst;
Speichern des Passagenpaares in einer Sammlung von Passagenpaaren;
Erzeugen eines gerichteten Graphen, wobei der gerichtete Graph einen ersten Knoten, der die erste Passage darstellt, einen zweiten Knoten, der die zweite Passage darstellt, einen dritten Knoten, der eine dritte Passage darstellt, eine erste gerichtete Kante von dem ersten Knoten zu dem zweiten Knoten basierend auf einer Kennzeichnung des Passagenpaares, eine zweite gerichtete Kante von dem zweiten Knoten zu dem dritten Knoten und eine dritte gerichtete Kante von dem dritten Knoten zu dem ersten Knoten umfasst;
Erkennen einer zyklischen Beziehung, wenn der Graph eine Schleife bildet;
Entfernen des dritten Knotens, der die dritte Passage darstellt, aus dem gerichteten Graphen und der Sammlung von Passagenpaaren als Trainingssatz von Passagen; und
Bereitstellen einer Benutzeroberfläche für eine Haltungsannotation,
**dadurch gekennzeichnet, dass**
die Benutzeroberfläche für die Haltungsannotation umfasst:
Anzeigen der ersten Passage und zweier als Paar vorgesehener Abfragen für das Thema;
Ermöglichen, dass eine oder beide Abfragen interaktiv auswählbar sind;
Empfangen der Auswahl eines der beiden Abfragepaare; und
Identifizieren des Passagenpaares basierend auf der Haltung auf Grundlage der Auswahl eines der beiden Abfragen.

2. Computerimplementiertes Verfahren nach Anspruch 1, wobei die Benutzerschnittstelle für die Haltungsannotation ferner umfasst: Deaktivieren der auswählbaren Abfrage der beiden Abfragen, wenn eine vorbestimmte Zeitspanne verstrichen ist, bevor eine Auswahl eine der beiden Abfragen empfangen wird.

3. Computerimplementiertes Verfahren nach Anspruch 1, wobei das computerimplementierte Verfahren ferner umfasst:
Bereitstellen einer Benutzeroberfläche für Überzeugungskraft-Annotation, wobei die Benutzeroberfläche für Überzeugungskraft-Annotation umfasst:
Anzeigen der Abfrage, wobei die Abfrage die Haltung für das Thema bereitstellt;
Anzeigen des Passagenpaares;
Aktivieren der interaktiven Auswahlmöglichkeit für eine der beiden Passagen des Passagenpaares;
Deaktivieren der Auswahlmöglichkeit für eine der beiden Passagen des Passagenpaares, wenn eine vorbestimmte Zeitspanne verstreicht, bevor eine Auswahl einer der beiden Passagen des Passagenpaares empfangen wird;
Empfangen der Auswahl einer der beiden Passagen des Passagenpaares; und
Kennzeichnen mindestens einer Passage des Passagenpaares basierend auf der Auswahl einer der beiden Passagen des Passagenpaares.

4. Computerimplementiertes Verfahren nach Anspruch 1, wobei ferner:
Sammeln der Passagen umfasst Erfassen von Daten aus mindestens einem Webinhalt auf einer Website oder einem elektronischen Dokument aus einem Dokumentenspeicher auf der Grundlage der Relevanz der Daten für das Thema.

5. Computerimplementiertes Verfahren nach Anspruch 1, wobei das computerimplementierte Verfahren ferner umfasst:
Bereitstellen des Passagenpaares für das Überzeugungskraft-Rangmodell;
Bestimmen einer Überzeugungskraftbewertung basierend auf dem Passagenpaar; und
Vergleichen der Überzeugungskraftbewertung und der Kennzeichnung des Passagenpaares;
Aktualisieren des Überzeugungskraft-Rangmodells basierend auf dem Vergleich zwischen der Überzeugungskraftbewertung und der Kennzeichnung des Passagenpaares.

6. Computerimplementiertes Verfahren nach Anspruch 5, wobei das Überzeugungskraft-Rangmodell auf einem aufgeschalteten neuronalen Netzwerk mit Rückpropagation basiert, um das Überzeugungskraft-Rangmodell mit Fehlerkorrektur zu aktualisieren.

7. Computerimplementiertes Verfahren nach Anspruch 6, wobei das aufgeschaltete neuronale Netzwerk eine Anfangsschicht zum Empfangen des Passagenpaares, eine Vielzahl von versteckten Schichten mit absteigender Reihenfolge der Dimensionen, eine letzte Schicht zum Erzeugen der Überzeugungskraftbewertung und einen Generator für neue Gewichte für die Rückpropagation zu dem aufgeschalteten neuronalen Netzwerk umfasst, wenn die Überzeugungskraftbewertung und die Kennzeichnung des Passagenpaares unterschiedlich sind.

8. Computerimplementiertes Verfahren nach Anspruch 7, wobei das gekennzeichnete Passagenpaar das Thema, die Haltung, das Passagenpaar und eine Überzeugungskraft-Annotation als Kennzeichnung des Passagenpaars umfasst.

9. Computerimplementiertes Verfahren nach Anspruch 1, wobei das computerimplementierte Verfahren ferner umfasst:
Empfangen der Abfrage, wobei die Abfrage das Thema und die Haltung umfasst;
Bestimmen einer Passage, wobei sich die Passage auf die höchste Überzeugungskraftbewertung bezieht auf Grundlage des Themas und der Haltung aus der einen oder den mehreren Passagen auf Grundlage der Haltung für das Thema;
Bereitstellen der Passage;
Empfangen einer Rückmeldung über eine Benutzerschnittstelle, wobei die Rückmeldung angibt, ob die Passage basierend auf der Haltung für das Thema überzeugend ist;
Aktualisieren des Überzeugungskraft-Rangmodells basierend auf der Rückmeldung.

10. Computerimplementiertes Verfahren nach Anspruch 9, wobei das computerimplementierte Verfahren ferner umfasst:
Bereitstellen einer Benutzerschnittstelle, wobei die Benutzerschnittstelle umfasst:
Empfangen der Abfrage in einem ersten Eingabebereich;
Empfangen einer Benutzereingabe in einem zweiten Eingabebereich, um eine Suche nach der Passage auszulösen; und
Anzeigen der Passage.

11. Computerimplementiertes Verfahren nach Anspruch 10, wobei für das computerimplementierte Verfahren ferner gilt, dass:
die Benutzeroberfläche ferner umfasst:
Empfangen einer Rückmelde-Eingabe, wobei die Rückmelde-Eingabe die Rückmeldung darüber darstellt, ob die Passage auf der Grundlage der Haltung für das Thema überzeugend ist.

12. System zum Trainieren eines Passagenüberzeugungskraft-Ranggebers auf der Grundlage von Passagen mit einer Abfrage, die eine Haltung zu einem Thema darstellt, wobei das System umfasst:
einen Prozessor (802); und
einen Speicher (804), der computerausführbare Anweisungen speichert, die, wenn sie ausgeführt werden, den Prozessor veranlassen zum:
Identifizieren (304) des Themas;
Sammeln (302) der Passagen, wobei die Passagen für die Abfrage relevant sind, die die Haltung zu dem Thema darstellt, und die Passagen aus einem oder mehreren Passagenspeichern stammen;
Identifizieren (308) eines Passagenpaares aus den Passagen, wobei das Passagenpaar eine erste Passage und eine zweite Passage umfasst, wobei sowohl die erste Passage als auch die zweite Passage zumindest auf der Haltung zu dem Thema basieren;
Kennzeichnen (310) des Passagenpaars, wobei sich die Kennzeichnung auf die Erzeugung einer Kennzeichnung des Passagenpaars gemäß einer relativen Überzeugungskraft zwischen der ersten Passage und der zweiten Passage auf der Grundlage der Haltung zu dem Thema bezieht;
Filtern (312) der ersten Passage des Passagenpaars, wenn die erste Passage eine geschlossene Pfadsequenz der Überzeugungskraft-Rangfolge der Passagen erzeugt;
Aktualisieren (318) eines Überzeugungskraft-Rangmodells unter Verwendung des Passagenpaares und der Kennzeichnung des Passagenpaares, wobei das Überzeugungskraft-Rangmodell auf einem maschinellen Lernmodell basiert;
Speichern des Passagenpaares in einer Sammlung von Passagenpaaren;
Erzeugen eines gerichteten Graphen, wobei der gerichtete Graph einen ersten Knoten, der die erste Passage darstellt, einen zweiten Knoten, der die zweite Passage darstellt, und eine erste gerichtete Kante von dem ersten Knoten zu dem zweiten Knoten auf der Grundlage der Kennzeichnung in Bezug auf Stufen der Überzeugungskraft für die erste Passage und die zweite Passage, eine zweite gerichtete Kante von dem zweiten Knoten zu einem dritten Knoten, der eine dritte Passage darstellt, umfasst;
Erkennen einer zyklischen Beziehung, wenn eine dritte gerichtete Kante von dem dritten Knoten zu dem ersten Knoten führt;
Entfernen des dritten Knotens, der die dritte Passage darstellt, aus dem gerichteten Graphen und der Sammlung von Passagenpaaren als Trainingssatz von Passagen; und
Bereitstellen einer Benutzeroberfläche für die Haltungsannotation,
**dadurch gekennzeichnet, dass**
die Benutzeroberfläche für die Haltungsannotation umfasst:
Anzeigen der ersten Passage und eines Abfragepaares zu dem Thema;
Ermöglichen eines interaktiven Auswählens einer der beiden Abfragen;
Empfangen der Auswahl einer der beiden Abfragen; und
Identifizieren des Passagenpaars auf der Grundlage der Haltung, die auf der Auswahl einer der beiden Abfragen basiert.

## Revendications

1. Procédé mis en œuvre par ordinateur pour générer une liste classée de passages sur la base du caractère convaincant d'une position relative à un sujet, le procédé comprenant :
la réception (622) d'un ou de plusieurs passages, dans lequel le ou les plusieurs passages comprennent une requête, dans lequel la requête comprend le sujet, dans lequel la requête spécifie la position, et dans lequel les passages fournissent des arguments basés sur la position relative au sujet ;
la fourniture (626) du ou des plusieurs passages à un modèle de classement du caractère convaincant, dans lequel le modèle de classement du caractère convaincant est basé sur un réseau de neurones ;
le classement (628) du ou des plusieurs passages sur la base de scores de caractère convaincant ;
la fourniture (630) d'un passage classé parmi le ou les plusieurs passages ;
l'identification d'une paire de passages lors de la réception d'une pluralité de passages, dans lequel la paire de passages comprend un premier passage et un deuxième passage ;
le stockage de la paire de passages dans une collection de paires de passages ;
la génération d'un graphe orienté, dans lequel le graphe orienté comprend un premier nœud représentant le premier passage, un deuxième nœud représentant le deuxième passage, un troisième nœud représentant un troisième passage, une première arête orientée allant du premier nœud vers le deuxième nœud sur la base d'une étiquette de la paire de passages, une deuxième arête orientée allant du deuxième nœud vers le troisième nœud, et une troisième arête orientée allant du troisième nœud vers le premier nœud ;
la détection d'une relation cyclique lorsque le graphe forme une boucle ;
la suppression du troisième nœud représentant le troisième passage du graphe orienté et de la collection de paires de passages en tant qu'ensemble d'apprentissage de passages ; et
la fourniture d'une interface utilisateur pour l'annotation de la position, **caractérisé en ce que** l'interface utilisateur pour l'annotation de la position comprend :
l'affichage du premier passage et d'une paire de requêtes relative au sujet ;
l'activation de l'une ou l'autre de la paire de requêtes pouvant être sélectionnées de manière interactive ;
la réception de la sélection de l'une ou l'autre de la paire de requêtes ; et
l'identification de la paire de passages sur la base de la position sur la base de la sélection de l'une ou l'autre de la paire de requêtes.

2. Procédé mis en œuvre par ordinateur selon la revendication 1, dans lequel l'interface utilisateur pour l'annotation de la position comprend en outre la désactivation de l'une ou l'autre de la paire de requêtes pouvant être sélectionnées lorsqu'une période de temps prédéterminée s'écoule avant la réception d'une sélection de l'une ou l'autre de la paire de requêtes.

3. Procédé mis en œuvre par ordinateur selon la revendication 1, le procédé mis en œuvre par ordinateur comprenant en outre :
la fourniture d'une interface utilisateur pour l'annotation du caractère convaincant, dans lequel l'interface utilisateur pour l'annotation du caractère convaincant comprend :
l'affichage de la requête, dans lequel la requête fournit la position relative au sujet ;
l'affichage de la paire de passages ;
l'activation de l'un ou l'autre de la paire de passages pouvant être sélectionnés de manière interactive ;
la désactivation de l'un ou l'autre de la paire de passages pouvant sélectionnés lorsqu'une période de temps prédéterminée s'écoule avant la réception d'une sélection de l'un ou l'autre de la paire de passages ;
la réception de la sélection de l'un ou l'autre de la paire de passages ; et
l'étiquetage d'au moins un passage de la paire de passages sur la base de la sélection de l'un ou l'autre de la paire de passages.

4. Procédé mis en œuvre par ordinateur selon la revendication 1, comprenant en outre :
la collecte des passages comprend le moissonnage de données à partir d'au moins l'un parmi un contenu web d'un site internet ou un document électronique provenant d'un dépôt de documents, sur la base de la pertinence des données par rapport au sujet.

5. Procédé mis en œuvre par ordinateur selon la revendication 1, le procédé mis en œuvre par ordinateur comprenant en outre :
la fourniture de la paire de passages au modèle de classement du caractère convaincant ;
la détermination d'un score de caractère convaincant sur la base de la paire de passages ; et
la comparaison du score de caractère convaincant et de l'étiquette de la paire de passages ;
la mise à jour du modèle de classement du caractère convaincant sur la base de la comparaison entre le score de caractère convaincant et l'étiquette de la paire de passages.

6. Procédé mis en œuvre par ordinateur selon la revendication 5, dans lequel le modèle de classement du caractère convaincant est basé sur un réseau de neurones à action directe avec rétropropagation pour mettre à jour le modèle de classement du caractère convaincant avec correction d'erreur.

7. Procédé mis en œuvre par ordinateur selon la revendication 6, dans lequel le réseau de neurones à action directe comprend une couche initiale pour recevoir la paire de passages, une pluralité de couches cachées présentant un ordre décroissant de dimensions, une couche finale pour générer le score de caractère convaincant, et un générateur de nouveaux poids pour la rétropropagation vers le réseau de neurones à action directe lorsque le score de caractère convaincant et l'étiquette de la paire de passages sont distincts.

8. Procédé mis en œuvre par ordinateur selon la revendication 7, dans lequel la paire de passages étiquetée comprend le sujet, la position, la paire de passages et une annotation de caractère convaincant comme étant l'étiquette de la paire de passages.

9. Procédé mis en œuvre par ordinateur selon la revendication 1, le procédé mis en œuvre par ordinateur comprenant en outre :
la réception de la requête, dans lequel la requête comprend le sujet et la position ;
la détermination d'un passage, dans lequel le passage se rapporte au score de caractère convaincant le plus élevé sur la base du sujet et de la position parmi le ou les plusieurs passages sur la base de la position relative au sujet ;
la fourniture du passage ;
la réception d'une rétroaction par l'intermédiaire d'une interface utilisateur, dans lequel la rétroaction spécifie si le passage est convaincant sur la base de la position relative au sujet ;
la mise à jour du modèle de classement du caractère convaincant sur la base de la rétroaction.

10. Procédé mis en œuvre par ordinateur selon la revendication 9, le procédé mis en œuvre par ordinateur comprenant en outre :
la fourniture d'une interface utilisateur, l'interface utilisateur comprenant :
la réception de la requête dans une première zone d'entrée ;
la réception d'une entrée utilisateur dans une deuxième zone d'entrée pour déclencher la recherche du passage ; et
l'affichage du passage.

11. Procédé mis en œuvre par ordinateur selon la revendication 10, le procédé mis en œuvre par ordinateur comprenant en outre :
l'interface utilisateur comprenant en outre :
la réception d'une entrée de rétroaction, dans lequel l'entrée de rétroaction représente la rétroaction sur le fait que le passage est convaincant ou non sur la base de la position relative au sujet.

12. Système pour entraîner un classificateur de caractère convaincant de passages sur la base de passages avec une requête représentant une position relative à un sujet, le système comprenant :
un processeur (802) ; et
une mémoire (804) stockant des instructions exécutables par ordinateur, qui, lorsqu'elles sont exécutées, amènent le processeur à :
identifier (804) le sujet ;
collecter (302) les passages, dans lequel les passages sont pertinents pour la requête représentant la position relative au sujet, les passages provenant d'un ou de plusieurs dépôts de passages ;
identifier (308) une paire de passages parmi les passages, dans lequel la paire de passages comprend un premier passage et un deuxième passage, le premier passage et le deuxième passage étant tous deux basés au moins sur la position relative au sujet ;
étiqueter (310) la paire de passages, dans lequel l'étiquetage se rapporte à la génération d'une étiquette de la paire de passages selon un niveau relatif de caractère convaincant entre le premier passage et le deuxième passage sur la base de la position relative au sujet ;
filtrer (312) le premier passage de la paire de passages lorsque le premier passage crée une séquence de chemin fermé de classement du caractère convaincant des passages ;
mettre à jour (318) un modèle de classement du caractère convaincant en utilisant la paire de passages et l'étiquette de la paire de passages, dans lequel le modèle de classement du caractère convaincant est basé sur un modèle d'apprentissage automatique ;
stocker la paire de passages dans une collection de paires de passages ;
générer un graphe orienté, dans lequel le graphe orienté comprend un premier nœud représentant le premier passage, un deuxième nœud représentant le deuxième passage, et une première arête orientée allant du premier nœud vers le deuxième nœud sur la base de l'étiquetage relatif aux niveaux du caractère convaincant pour le premier passage et le deuxième passage, une deuxième arête orientée allant du deuxième nœud vers un troisième nœud représentant un troisième passage ;
détecter une relation cyclique lorsqu'une troisième arête orientée relie le troisième nœud au premier nœud ;
supprimer le troisième nœud représentant le troisième passage du graphe orienté et de la collection de paires de passages en tant qu'ensemble d'apprentissage de passages ; et
fournir une interface utilisateur pour l'annotation de la position, **caractérisé en ce que** l'interface utilisateur pour l'annotation de la position comprend :
l'affichage du premier passage et d'une paire de requêtes relative au sujet ;
l'activation de l'une ou l'autre de la paire de requêtes pouvant être sélectionnées de manière interactive ;
la réception de la sélection de l'une ou l'autre de la paire de requêtes ; et
l'identification de la paire de passages sur la base de la position sur la base de la sélection de l'une ou l'autre de la paire de requêtes.
